(19) Europäisches Patentamt
European Patent Office
Office européen des brevets

(11)  **EP 3 278 949 B1**

(12)  **EUROPEAN PATENT SPECIFICATION**

(45) Date of publication and mention
of the grant of the patent:
**01.11.2023  Bulletin 2023/44**

(21) Application number: **17183942.6**

(22) Date of filing: **31.07.2017**

(51) International Patent Classification (IPC):
**B29C 44/18** *(2006.01)*      **B29C 44/34** *(2006.01)*
**B29C 44/60** *(2006.01)*      **F25D 23/06** *(2006.01)*

(52) Cooperative Patent Classification (CPC):
**F25D 23/064; B29C 44/188; B29C 44/362;**
**B29C 44/60;** B29C 44/3403; B29C 44/3415;
B29K 2075/00; B29K 2105/0094; B29K 2995/0015;
B29K 2995/0097; B29L 2031/7622

(54) **METHOD AND APPARATUS FOR FOAMING A HOLLOW BODY**

VERFAHREN UND VORRICHTUNG ZUR SCHÄUMUNG EINES HOHLKÖRPERS

PROCÉDÉ ET APPAREIL DE MOUSSAGE DE CORPS CREUX

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **01.08.2016  IT 201600080835**

(43) Date of publication of application:
**07.02.2018  Bulletin 2018/06**

(73) Proprietor: **Cannon S.p.A.**
**20121 Milan (IT)**

(72) Inventors:
• **Volpato, Marco**
**20121 Milan (IT)**

• **Corti, Maurizio**
**20121 Milan (IT)**
• **Zampini, Samuele**
**20121 Milan (IT)**

(74) Representative: **Luppi Intellectual Property S.r.l.**
**Viale Corassori, 54**
**41124 Modena (IT)**

(56) References cited:
**EP-A1- 2 366 525          EP-A2- 2 148 156**
**WO-A1-2006/013004    WO-A2-2010/094715**
**US-A- 4 246 214          US-A1- 2007 182 045**
**US-A1- 2012 093 959**

**Description**

INVENTION BACKGROUND

The present invention concerns a method and apparatus for foaming a hollow body, under vacuum conditions, with a polyurethane mixture. The hollow body, according to the present invention includes, in particular but not exclusively, a refrigerator cabinet of the domestic, commercial or industrial type that consists of two half-shells or oppositely arranged plates, which in an assembled condition, define a cavity in which a dosed quantity of polyurethane mixture is injected to form insulating foam.

The injected polyurethane mixture reacts chemically and expands in the form of foam that flows until the cavity of the hollow body is completely filled, generating a thermal insulating layer, which also has the additional function of conferring structural rigidity to the hollow body.

PRIOR ART

The injection of polyurethane foams into the hollow walls of refrigerator doors and cabinets has been known for some time, not only in order to obtain the desired thermal insulation but also to consolidate the structure of the said foamed hollow bodies, by lending to the latter mechanical resistance and solidity properties, shape stability over time, while limiting the weight. The layer of polyurethane foam also has the function of preserving the cabinet's integrity, fighting the onset of conditions favourable to the formation of condensate and rust. The foaming process therefore offers the twofold function of structurally consolidating and thermally insulating a refrigerator cabinet or any other hollow body.

An apparatus, such as the one described in EP1778449B1 of the same applicant, is known for foaming refrigerator cabinets, comprising a conventional foaming jig enclosed in a chamber inside which a certain level of vacuum is obtained to favour the foaming process.

The vacuum, when applied properly, favours and accelerates the expansion of the polyurethane mixture and this allows the use of rapid polyurethane formulations and the formation of foam with a small cell structure and homogeneous density, and hence provides better insulation for the whole hollow body.

Subsequently, another apparatus was proposed, described in WO-A-2010/094715 of the same applicant, designed to improve foaming under vacuum conditions thanks to the use of a foaming cell, which reduces the volume of air to be sucked, and to reduce the time of the production cycle.

Afterwards, another apparatus was proposed, described in US8894402 of the same applicant, with an improved configuration compared to the previous pieces of apparatus, and fitted with technical features for rapid adaptability, in an automatic way, to various sizes of cabinets to be foamed.

The systems described above achieve good results in terms of quality of the foaming obtained. However, there is still room for improvement. In fact, given the tremendous importance that the foaming process has in the production of all types of refrigerators (domestic, commercial and industrial) on a worldwide scale, and therefore considering the large volumes of production in question, it is always desirable and economically productive to pursue improvements in terms of reduced time for the injection, foam expansion, and demolding of the processed objects. In addition, there is always a strong need to obtain an even more homogeneous density distribution, as a further step beyond obtaining a minimum density; this would reduce the total density, resulting therefore in the use of less raw materials and an increase in the insulating capacity of the foamed cabinets.

To explain the problems that still occur in the foaming processes some aspects need to be clarified, as described below.

In the foaming process of a refrigerator cabinet, it is standard practice to define a minimum density value - obtainable by sampling the reacted foam in various points of the foamed object - to ensure that the foamed object is not subject to distortions or deformations during the curing of the foam in the time. The minimum density value is defined by taking samples, not only in various points of the foamed object, but also through the analysis of various samples taken from the actual production.

In a foamed cabinet, therefore, there are areas in which the foam has the minimum density value, and other areas in which the foam has higher density values, more or less accentuated according to the obtainable homogeneity of the density. If an adequate minimum density value is 28÷36 grams/litre, there may be areas with a density 4-6 grams/litre higher than the said minimum density value.

The objective pursued is to optimise the foaming process in order to obtain foam distribution with a density variation that is not more than 1-2.5 grams/litres compared to the optimal minimum density established.

It should also be noted that a high reactivity of the mixture, i.e. reduced polymerization times, gives rise to smaller foam cells resulting in a beneficial increase in thermal insulation. More precisely, foam cells, during their formation, progressively reduce the thickness of their membranes until they break; as a result they collapse into increasingly larger cells, and the cells tend to grow until the polymerization process stops this phenomenon. Naturally, a high reactivity means faster polymerization and hence a reduction of the above mentioned collapse and enlargement phenomenon which is deleterious for good thermal insulation.

Some problems still remain unsolved with the use of conventional foaming systems. In particular, during the foaming process the expanding polyurethane mixture tends to trap air bubbles during its deposition, flow and expansion. The bubbles tend to float on the surface of the foam, in contact with the upper wall of the cavity of the refrigerator cabinet or door in which they occur.

The larger air bubbles collapse when they come into contact with the upper wall. The smaller bubbles - which cannot reach the surface in time because their upward travel speed is slower - remain trapped in the middle of the solidified foam, giving rise to defects/inhomogeneities that negatively affect the thermal insulation capacity, and also cause a visible defect in the form of small bumps or bulges on the surface that encloses the foam. Generally, with the process for foaming the refrigerator cabinets, the mixture is deposited on the lower bottom area (e.g. rear wall of the refrigerator cabinet) from where it expands and starts to flow towards the empty parts, which are at the sides of the puddle, and then in the contiguous walls. The filling process takes place in virtue of the thrust exerted by the gas pressure that develops and expands the foam; the formation of gas is stimulated by the higher temperature of the wall with which the foam comes into contact. In fact, the contact with the hot surface of the wall reduces the viscosity of the liquid film in contact with the wall, and promotes the development of expanding gas bubbles which further reduce the apparent viscosity of the foam; at the same time the wall pressure is transferred to the foam, on which it exerts a thrust, which makes it flow faster to the empty parts.

The foam expansion thrust is countered by the atmospheric pressure and the viscous friction that occurs when it flows along the walls. The expansion thrust is also countered by a possible internal air pressure gradient due to the resistance that the latter encounters in the flow through cabinet narrowings, which slow down its expulsion towards the outside environment. The viscous friction along the expansion path and the aforementioned air pressure gradient against the foam are important factors that determine the flow time required to fill the refrigerator cabinet completely, and that therefore limit the estimated reactivity of the mixture. Viscous friction and pressure gradient are also the causes of an increase in average foam density and of a very inhomogeneous density distribution along the expansion path.

The need to wait for a certain time for the cavity of the cabinet to be totally filled, that is until the areas of the cavity furthest away from the area of deposition of the mixture are also reached and filled, limits the productivity of the cycle. In addition, the aforementioned reactivity limitation causes an enlargement of the cells and a relative reduction in the thermal insulation capacity.

The presence of low and inhomogeneous temperatures on the bottom surface on which the reacting resin is poured may also cause the formation of crusts, i.e. a layer that is in contact with the wall from which no foam is generated and which therefore has no thermal insulation capability; in addition, the average density of the reaction mixture in the area concerned increases significantly.

It is also important to highlight other aspects related to the injection of the mixture in the cavity of the hollow body, as described below. Currently, the polyurethane mixture is injected by feeding, under pressure, dosed quantities of at least two chemically reactive liquid components to a high pressure type mixing device that transforms the pressure energy into mixing energy by turbulence mixing. Generally, a high pressure mixing device, normally referred to as mixing head, comprises one or more chambers connected in succession, fitted with suitable cleaning means, in which the chemical components are fed through suitable nozzles or throttles, so that the castings of liquid polyurethane components, with high kinetic energy, meet and collide with each other, generating a strong turbulence that results in them being mixed; the mixture then flows along a cylindrical outlet conduit that conveys it outwardly. A sliding cleaning member moves along the conduit for removing the residues and outwardly discharging them once the delivery of reactive mixture has ended.

Consequently, the mixing device delivers a flow or jet of a liquid or partially pre-expanded polyurethane mixture, whose flow rate and speed depend on the flow rates of the single components and on the section of the mixing device's delivery conduit. A high pressure mixing device is described, for example, in US-A-4.332.335 in the name of the same applicant. Generally, the flow of the delivered mixture is laminar or coherent up to a certain delivery rate; at a higher speed, the flow shows a loss in coherence and an accentuated turbulence that increases as the flow rate increases.

To inject the polyurethane mixture into the cavity of the cabinet, as shown for example in EP1781457, the delivery conduit of the high pressure mixing apparatus is normally introduced into a hole provided on one side of the cavity between the two shells, in one or more points chosen so that the mixture is deposited in the cavity, and then when it expands it can flow and fill all the spaces. The mixture must be injected in an adequate manner to avoid certain drawbacks described below. First of all, it is important to avoid the formation of vortices, ripples and splashes that cause an irregular flow of the mixture, which results in the intake of air and causes an inhomogeneous structure and density of the foam obtained. In the past, various technical expedients have been proposed to try to improve the injection operation of this moulding technology. One of these is represented, for example, by the solution proposed by DE-A-10243873, which envisages a mixing apparatus fitted with a long supply tube that extends into the cavity to be filled; the polyurethane mixture is delivered at a predetermined rate, while the mixing apparatus with the supply tube is gradually moved backwards to distribute the mixture into the cavity of the hollow body. This solution, however, is considerably complex both in construction and functional terms, due to the need to coordinate the backward movement of the mixing apparatus and supply tube with the flow rate of the mixture delivered, and due to the need to adopt all the automatisms necessary to coordinate such movement. In addition, the inner surfaces of the supply tube are not cleaned by a self-cleaning member that slideably runs inside; therefore, the said supply tube must be removed after each supply phase, or after an extremely limited number of supplies, and it must be replaced with a new supply tube; apart from the additional costs, this slows down and complicates the production cycle.

An improved technical solution to overcome the problems discussed above has been proposed in EP2366525 or in the corresponding US patent US8709313B2, of the same applicant. This solution adopts a high pressure mixing device and provides for releasing the polyurethane mixture into the cavity of the cabinet to be filled, starting from a maximum injection rate and flow, for a predetermined amount of time; the injection rate and flow are then reduced according to preset decreasing values and times, distributing the jet of the mixture along a longitudinal distribution band region maintaining a constant reaction relationship between the polyurethane components.

The solution proposed in EP2366525 offers excellent results in terms of quality of the foaming process and homogeneity and distribution of the foam obtained. The same applicant however has identified further improvements, as described below.

OBJECTS OF THE INVENTION

The main object of the present invention is to provide a method and apparatus suitable to improve the technology in question, by improving the distribution of the polyurethane mixture in the cavity to be filled in a hollow body, in particular of a refrigerator cabinet.

In particular, the invention aims to obtain a further improved isometric expansion of the polyurethane foam and prevent the formation of trapped bubbles, avoiding the formation of an incoherent or chaotic mixture jet and constantly guaranteeing the delivery of a laminar or coherent jet, thanks to the use of mixing heads with suitable flow rate control and also thanks to adequate temperature control, as described below.

BRIEF DESCRIPTION OF THE INVENTION

These aims and further advantages are achieved by means of a method and apparatus as defined in the claims.

In particular, according to a first aspect of the invention, a method for foaming a hollow body is provided, according to claim 1.

In a second aspect of the invention, there is provided an apparatus, as defined in claim 10, for implementing the method according to claim 1.

Owing to the method and apparatus according to the invention, it is possible to fill the cavity of the hollow body more quickly, with the threefold advantage of increasing productivity, obtaining finer cells that therefore have greater insulating power and structural characteristics, and also reducing the quantity of polyurethane mixture injected.

In particular, thanks to the supporting and thermostating table destined to act on the rear wall of the refrigerator cabinet, and therefore owing to the constant control of the temperature of the surfaces on which the reactive resin is poured and on which the foam subsequently flows during its expansion, a rapid and homogeneous foam expansion and a lower average density of the wall thickness is guaranteed.

BRIEF DESCRIPTION OF THE DRAWINGS

These and further characteristics of the method and apparatus will be better highlighted in the following description, with reference to the drawings, in which:

Figure 1 is a schematic view of an apparatus according to the invention, which shows, in a longitudinal section of the rear cavity shown from above, a refrigerator cabinet and the foam flow inside during the injection;
Figure 2 shows, schematically, a lateral view of a jet of polyurethane mixture inside the cavity of a hollow body;

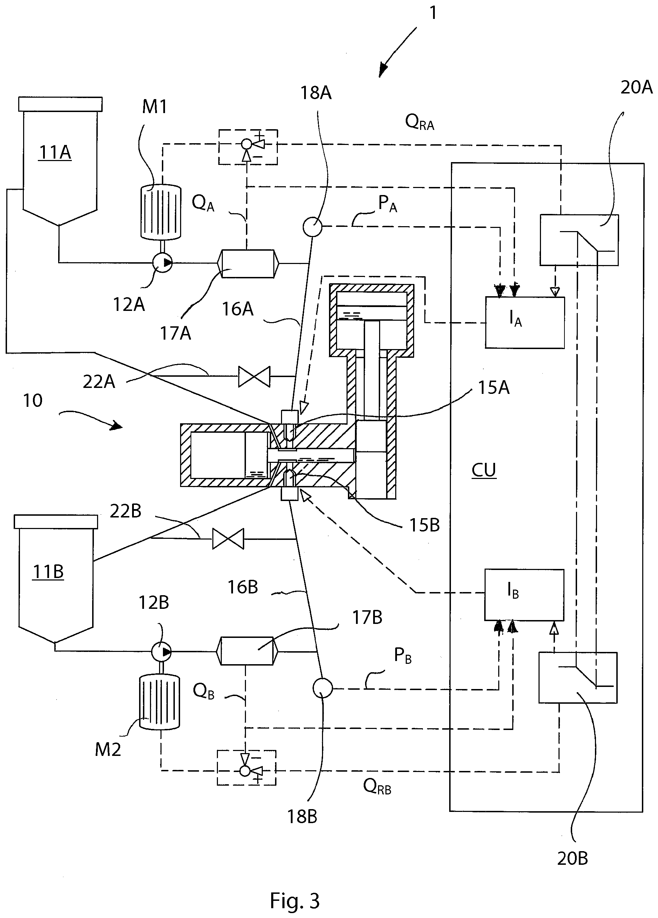

Figure 3 shows a schematic view of the apparatus and a control system associated to it, represented in blocks;
Figure 4 is a partially sectioned view of the foaming apparatus according to the invention, in a first operating position in which a refrigerator cabinet is ready to be loaded into the respective containment mold;
Figures 5 and 6 show, according to two different views, the foaming apparatus in a second operating position in which the refrigerator cabinet is ready to be lifted to be closed in the containment mold;
Figure 6 shows the foaming apparatus with the refrigerator cabinet closed in the relevant containment mold.

DETAILED DESCRIPTION OF THE INVENTION

With reference to the accompanying drawings, apparatus 1 and the method according to the invention are described below, for foaming a hollow body 2, in particular a refrigerator cabinet 2. In particular, the refrigerator cabinet 2 is composed of a first half-shell 2' and a second half-shell 2", which assembled define a foaming cavity 4, or hollow space 4, having a prevailing length dimension $D_L$, i.e. that it extends with a longitudinal dimension that prevails compared to the other dimensions. In the present discussion, reference will be made to a cavity 4, having a thickness (hence the thickness of the thermally insulating layer generated by foaming) not greater than about 80 mm.

The polyurethane mixture M, which is used with the method and apparatus 1, is obtained by turbulence mixing, using a high pressure mixing device 10, of two chemically reactive polyurethane components A and B, such as a polyol and an isocyanate.

The mixture M is of a highly reactive type, i.e. it is a mixture M with chemical characteristics with a so-called "cream time" of less than 6 seconds, a so-called "gel time" ("tack free" time) of 15 ÷ 30 seconds, and a polymerization time that allows for demolding in 2 ÷ 3 minutes (while the reaction takes hours to complete) in the case, as mentioned above, of polymerized thicknesses equal to or less than 80 mm.

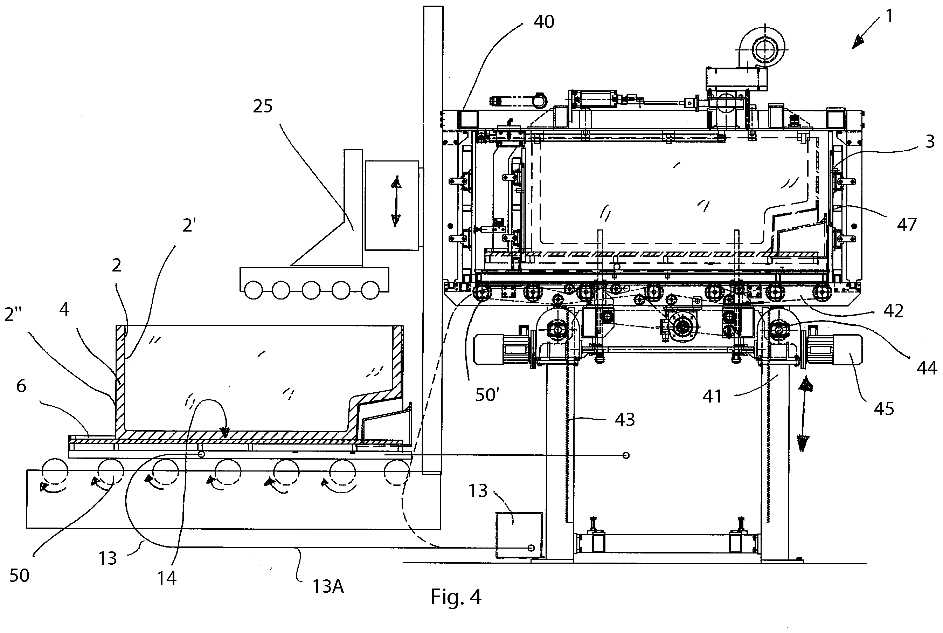

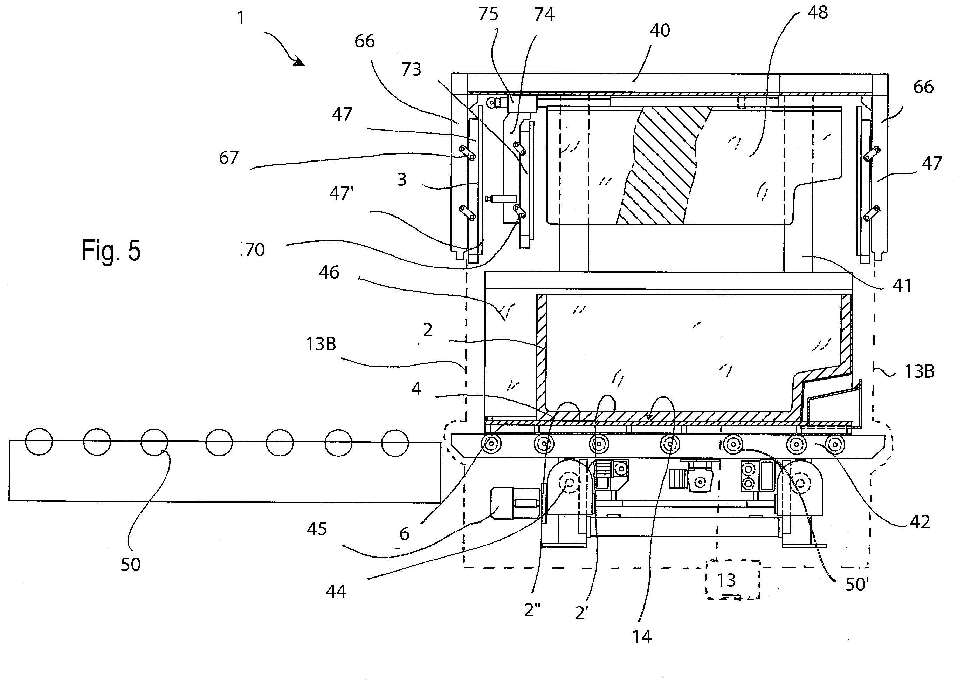

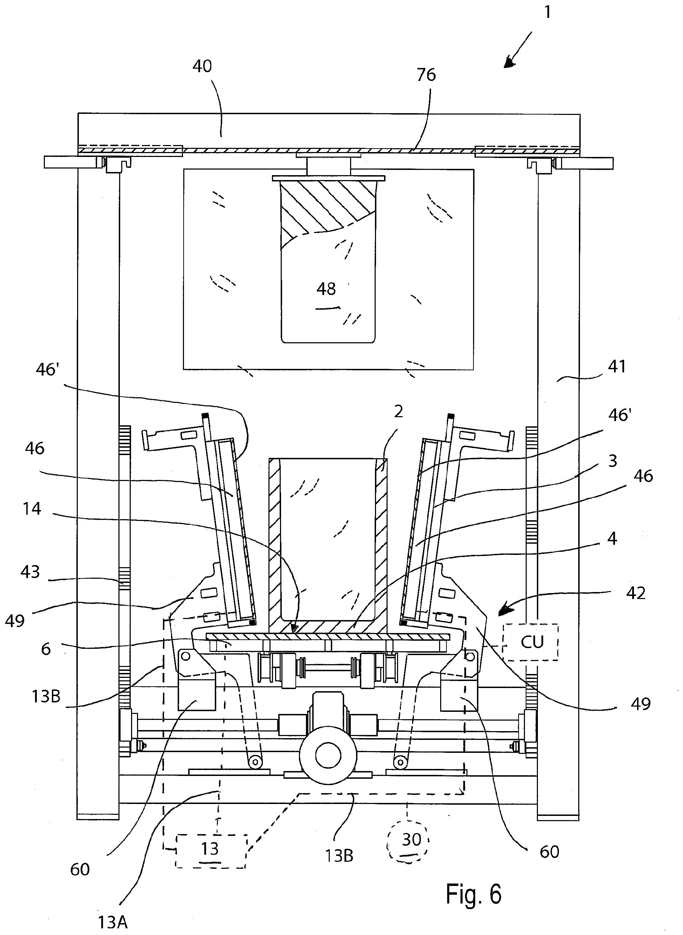

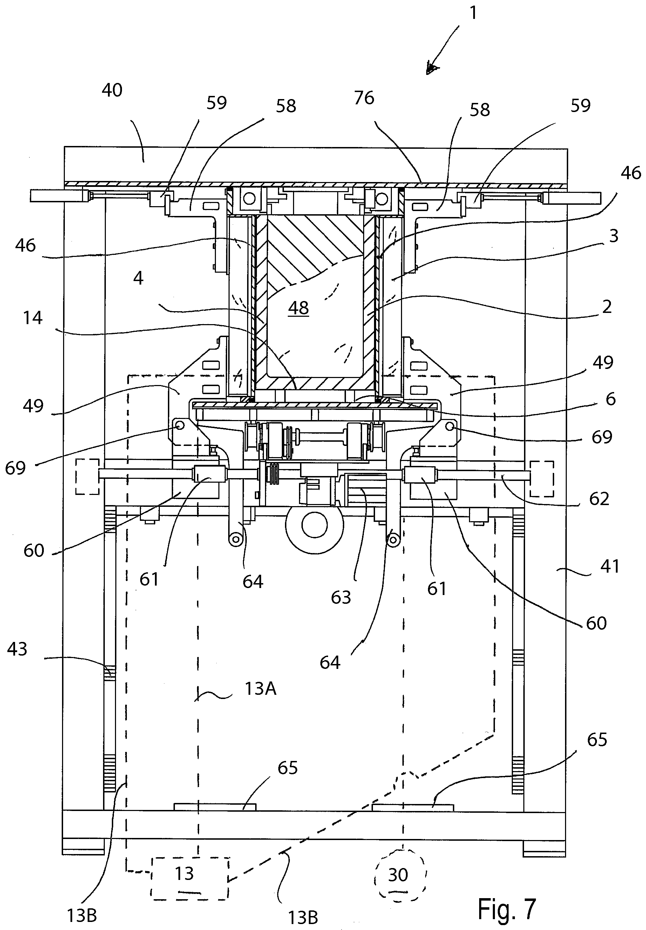

The apparatus 1 comprises a main frame 40 comprising vertical guide uprights or posts 41 to support a horizontal auxiliary frame 42, that moves vertically between a lower position (shown in figures 5 and 6), and an upper position shown in figures 4 and 7.

The vertical movement of the auxiliary frame 42 is achieved by means of driving means comprising toothed wheel means 44, fitted on the mobile auxiliary frame 42, moved by suitable motors 45, and that engage with respective racks 43 formed on the vertical guide uprights 41.

Apparatus 1 comprises a containment mold 3, defining a foaming cell, and configured to enclose, in an air-tight condition, the refrigerator cabinet 2.

The high pressure mixing device 10 comprises two nozzles 15A, 15B for supplying the single polymeric components A and B, and it is configured to inject a coherent jet J of the mixture M in the said cavity 4 of the refrigerator cabinet 2 when the latter is enclosed, in sealed condition, in the aforementioned containment mold 3.

The mixing device 10, or mixing head, is operatively connected with storage reservoirs 11A, 11B of said polymeric components A and B by supply lines 16A, 16B and respective dosing pump units 12A, 12B, operatively connected to a programmable control unit CU.

The supply lines 16A, 16B can be further connected to the respective storage reservoirs 11A, 11B by means of special recirculation lines 22A, 22B, along which the respective components flow at a pressure lower than the one with which the components are injected into the mixing head 10.

The control unit CU is configured to activate the said dosing pump units 12A, 12B, to obtain a jet J in coherence conditions during the injection in the foaming cavity 4. The control unit CU acts on the dosing pump units 12A, 12B to vary the mass flow rate $\dot{m}$ and the average kinetic energy $E_{cin,sp}$, keeping the coherence conditions, of the jet J during the pouring and the following expansion of the reactive mixture M in the cavity 4 of the refrigerator cabinet 2, as explained more in detail below.

The control unit CU acts on the motors M1, M2 of the dosing pump units 12A, 12B, to check the flow rates of the polymeric components A and B in real time.

The apparatus 1 is provided with mass or volume flow rate detection means 17A, 17B, arranged for detecting the flow rates QA, QB of the individual polyurethane components A, B being fed to the high pressure mixing device 10 on the respective supply lines 16A, 16B.

The mass or volume flow rate detection means 17A, 17B, provide a signal of the detected flow rate to a respective input IA, IB of the electronic control unit CU.

The apparatus 1, also includes pressure transducer means 18A, 18B, being arranged to detect, on the respective supply lines 16A, 16B, the pressure values $P_A$, $P_B$ of the individual polyurethane components A, B being fed to the high pressure mixing device 10.

The pressure transducer means 18A, 18B, provide a signal of the pressure values $P_A$, $P_B$ detected at the respective input IA, IB of the electronic control unit CU.

In particular, the electronic control unit CU comprises a controller operatively connected with said motors M1, M2, said controller including memory means 20A, 20B, being suitable to generate QRA, QRB signals of a variable reference flow rate for each of the polyurethane components A, B to be fed to the respective nozzles 15A, 15B of the high pressure mixing device 10. The electronic control unit CU is programmed by a software suitable to receive as an input the data about the quantity to be dispensed for each area, and the respective flow rate variation of a polyurethane mixture to be dispensed; it is also suitable to calculate and store, in said memory means 20A, 20B, dispensing times and variations of the flow rates of the individual polyurethane components A, B, to be fed to the high pressure mixing device 10, and consequently to vary dispensing flow rate, velocity and times of the jet of polyurethane mixture being injected in the refrigerator cabinet 2, according to the signals QRA, QRB, of variable reference flow rate, being generated by the controller and according to the signal of flow rate QA, QB, being detected for the individual polyurethane components A, B. The aforementioned motor means M1, M2 are of the alternated or continuous current type and are connected to a power supply electrical circuit with closed loop control for the rotation speed, and are configured to operate with a variable velocity according to the signals of reference variable flow rate QRA, QRB being generated by the software of the control unit CU, as a function of the programmed flow rate and ratio data.

The apparatus 1 includes a supporting table 6, or pallet, for supporting the refrigerator cabinet 2, to which thermostating means 13 are associated, which are operatively connected to the control unit CU.

The supporting table 6, when placed on the horizontal auxiliary frame 12, is lifted from the lower position to the upper position of closure of the containment mold 3.

The support table 6 has a planar structural configuration, with a flat top surface so as to make it possible to close and seal the foaming cell containing the refrigerator cabinet 3 to be foamed.

The thermostating means 13 comprise suitable conduits that extend inside the supporting table 6 and into which a heat transfer fluid flows at a temperature $T_{contr}$, which, during circulation, carries out a thermostating action on the surface of the refrigerator cabinet 2 on which the reactive resin is poured, the refrigerator cabinet 2 being supported by the supporting table 6.

The circulation conduits inside the table 6 are connected via flexible external conduits 13A to a suitable thermal source 13, configured to maintain the heat transfer fluid at the set temperature $T_{contr}$ and controlled by the programmable control unit CU. The external conduits 13A are of the flexible type to allow the movement of the supporting table 6, both the horizontal movement for the insertion in the mold 3 and the vertical movement due to the lifting / lowering of the auxiliary frame 42.

The thermostating means 13, associated to the supporting table 6, perform the function of heating, or maintaining at an adequate temperature, both the internal surface 14 on which the resin is deposited and, by means of flexible conduits 13B, the other walls of the refrigerator cabinet 2 both during the insertion and stay in the containment mold 3.

Owing to the flexible external conduits 13A and to the flexible conduits 13B it is not necessary to provide the thermal source 13 onboard the thermostating supporting table 6. In this way, the thermostating-supporting table 6 is faster, lighter and easier to move.

In particular, at an initial stage of the process, the heat transfer fluid transfers heat to the supporting table 6, and then to the bottom wall of the refrigerator cabinet 2, to promote and favour the foaming reaction, while at a later stage of the foaming process, the heat transfer fluid subtracts heat from the table 6, and therefore from the refrigerator cabinet 2 to favour the shape-stabilization of the foam and to allow faster demolding of the refrigerator cabinet 2 just foamed.

The horizontal movement of the table 6 along the auxiliary frame 42 in the lower position shown in Figure 5, is obtained by means of a roller conveyor 50 and an additional roller conveyor 50' or other equivalent conveyor means, provided on the lifting surface defined by the auxiliary frame 42.

A gripping and transfer device 25 (Figure 4) is also provided for transferring - onto the table 6 positioned on the roller conveyor 50 - the preheated refrigerator cabinet 2 to be inserted into the mold 3. The gripping and transfer device 25 also takes the said refrigerator cabinet 2 once it has been foamed, and delivers it to the next stations in the production line.

The containment mold 3 comprises side containment, contrast and thermal conditioning panels, configured to define, in the closed configuration, the foaming cell, and to enter in contact with the outer surfaces of the side walls of the refrigerator cabinet 2. In particular, the apparatus 1 comprises two side counteraction panels 46, hinged onto the auxiliary frame 42, and two transversal counteraction panels 47, hinged onto to the main frame 40.

The side 46 and transversal 47 counteraction panels have, on the inner sides with respect to the foaming cell, flat metal plates 46', 47' respectively, which cooperate to ensure a closed air-tight configuration of the containment mold 3 and to ensure thermal conditioning (maintaining the desired temperature) of the walls.

The containment mold 3 also comprises a counteraction male element 48, which is connected, in a removable way, to a top area of the main frame 40 and shaped and configured to adhere to the internal surfaces of the refrigerator cabinet 2.

The position of the counteraction panels is adjustable, so they can adapt in an immediate and automatic way to different dimensional and geometric formats of refrigerator cabinets to foam, without the need for any modification.

More specifically, as shown in figures 6, 7, each side counteraction panel 46 is connected to a swinging arm 49, hinged to a slide element 60 that is slideable in a transverse direction with respect to the longitudinal axis of the auxiliary frame 42. In particular, each slide element 60 is movable on a guide of the auxiliary frame 42 and is coupled to a nut screw 61, operatively connected to a drive shaft 62 extending transversely on the auxiliary frame 42.

The drive shaft 62, driven by a motor 63, features a right-hand thread and a left-hand thread, so as to simultaneously control the two respective slide elements 60, and hence the two side counteraction panels 46, movable in opposite directions.

Each swinging arm 49 rotates around a hinge 69 and has a lower protrusion 64 arranged to enter in contact with a stop element 65, in a lower position. When the auxiliary frame 42 is completely lowered in the position of Figure 5 or 6, each lower protrusion 64 enters in contact with the respective stop element 65, automatically causing the outward tilt or rotation of the respective panel 46, with consequent automatic opening of the mold 3.

The opposite closing movement of the side counteraction panels 46 occurs, during the lifting of the auxiliary frame 12, by gravity due to the particular distribution of the weights of the swinging arms 49.

The transverse counteraction panels 47, as shown in Figure 5, are connected, by means of connection plates 67, to vertical columns 66. The lower ends of the vertical columns 66 are configured to engage with the auxiliary frame 42 in a raised position, so that the transverse counteraction panels 47 are pushed against the respective outer surfaces of the refrigerator cabinet 2. Suitable locking means 59 (Figure 7) are also envisaged, driven by suitable actuators, to lock the counteraction arms 58 connected to the counteraction panels 46. In this way the counteraction panels 46 are firmly locked in the closed configuration of the foaming cell.

With reference to Figure 5, the transverse counteraction panels 47 can be provided with auxiliary panels 73, supported in a mobile way by the main frame 40, whose position is adjustable so it can adapt to the longitudinal dimension of the refrigerator cabinet 2. The auxiliary panels 73 are connected, by means of plates or connecting-rods 70, to other vertical columns 74 which are horizontally movable, by means of a nut-screw coupling 75, so they adapt to the longitudinal end of the refrigerator cabinet 2.

The apparatus 1 comprises vacuum generation means 30, operatively connected with the control unit CU, configured to reduce the pressure inside the mutually closed and sealed walls of the mold 3 which contain the refrigerator cabinet and the male element, and inside the cavity 4 of the refrigerator cabinet 2. The vacuum generating means 30 include a vacuum reservoir, valve elements and a suction device, for generating the required vacuum or depression level that is needed to help the distribution and development of the foam in the hollow walls of the refrigerator cabinet 2, in the sealingly closed configuration of said containment mold 3. As mentioned, by interposing suitable gaskets, the side and transverse counteraction panels 46, together with the thermostating table 6 and the male element 47 - protruding from an upper closure top 76 - cooperate to enclose, in an airtight condition, the refrigerator cabinet 2, so that the desired degree of vacuum can be reached.

Functioning of the apparatus 1 and the associated foaming method according to the present invention are described below.

The refrigerator cabinet 2 arriving from a preheating oven (not shown), by means of the gripping and transfer device 25 is positioned on the thermostating table 6, placed on the roller conveyor 50, while the auxiliary frame 42 is in the lowered position and the containment mold 3 is in the fully open configuration ready to receive the refrigerator cabinet 2.

The refrigerator cabinet 2 is held in a horizontal laid position, in the typical "open mouth facing upwards" position, i.e. with the opening of the cavity of the cabinet 2 facing upwards.

The refrigerator cabinet 2, supported by the thermostating table 6, is transferred - thanks to the roller conveyor 50 and the further rollers 50' - to the auxiliary frame 42, which subsequently can move towards the raised closed position, shown in Figure 7.

Once the lifting operation is complete, the side panels 46 and transverse panels 47, with the male element 48 and the upper closure panel 76, cooperate to exercise the right counter action against the refrigerator cabinet 2, which is isolated in an airtight condition from the outside environment. Meanwhile, the thermostating table 6, crossed by the heat transfer fluid maintained at the temperature $T_{contr}$, keeps the surface of the back wall of the refrigerator cabinet 2 - on which the reactive resin is placed - at the correct temperature favourable for the foaming reaction. The vacuum generation means 30, also duly controlled by the control unit CU, lower the pressure in the cavity 4 of the refrigerator cabinet 2 to a value between 600 and 900 absolute millibars, while the high pressure mixing device 10, which in the meantime has been coupled by means of an inlet with sealed gasket to the first end 5 of the refrigerator cabinet 2, starts injecting the polyurethane mixture M.

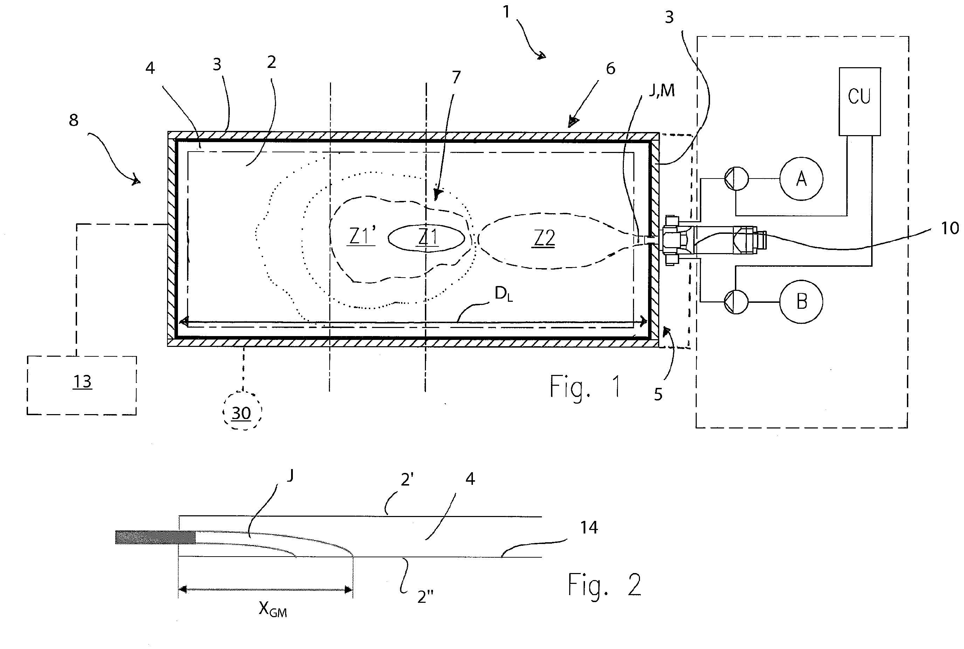

In particular, a supply conduit or mouth of the mixing head 10 is introduced into a special hole obtained in the half-shell 2" so as to direct the mixture jet in a longitudinal direction, parallel to the surfaces of the two half-shells 2', 2" or slightly tilted upwards (0 to 15 degrees relative to the horizontal plane). Generally, when the thickness of the cavity is not high, a horizontal injection direction is preferable to avoid the instant collision of the jet J with the upper surface that delimits the cavity. A first dosed quantity of mixture M is injected with a coherent jet J, having an initial value of mass flow rate $\dot{m}_i$ and average kinetic energy $E_{cin,sp}$, so as to reach an intermediate area 7 on the internal surface 14 of the lower half-shell 2" to form a puddle Z1, as shown schematically in Figure 1.

The coherence of the jet J is guaranteed by the control unit CU that controls the mixing device 10 in respect of a condition that is satisfied by a formula, described below, which includes the so-called "shear rate", Sr. The "shear rate" Sr indicates the laminar flow velocity gradient at the outlet of the conduit of the high pressure mixing device 10 (cylindrical outflow conduit); this gradient depends on the radius R of the conduit, on the flow rate and the viscosity of the fluid, and can be defined by the following relationship:

$$Sr = \frac{dv_{zm}}{dr}$$

Where $v_{zm}$ is the velocity of the fluid along the longitudinal direction of the conduit.

In the peripheral areas of the flow it is

$$Sr_0 = \frac{dv_{zm}}{dr}$$

with $r \rightarrow r_0$

Taking therefore into account the following quantities:

Average velocity (integral of $E_{cin}$) $\qquad v_{m,E_c} = \frac{2}{\sqrt{3}} \frac{\dot{m}}{\rho \pi r_o^2} \qquad \left[\frac{m}{s}\right]$

Specific kinetic energy $\qquad E_{cin,sp} = \frac{1}{2}\rho v_{m,E_c}^2 \qquad \left[\frac{J}{m^3}\right]$

Sher rate $\qquad \dot{\gamma} = 4\frac{v_{m,E_c}}{r_o} \qquad \left[\frac{1}{s}\right]$

Fluidity $\qquad F = 1/\mu \qquad \left[\frac{1}{Pa \cdot s}\right]$

Equivalent fluidity $\qquad \tilde{F} = \frac{\dot{\gamma}}{E_{cin,sp}} \qquad \left[\frac{1/s}{J/m^3}\right] = \left[\frac{1/s}{Nm/m^3}\right] = \left[\frac{1/s}{Pa}\right]$

Inverse kinematic diffusivity:

$$\mu = \tilde{F}\rho = \frac{\dot{\Upsilon}}{E_{cin,sp}}\rho$$

where

m is the mass flow rate [Kg/sec] and is equal to: $0.050 \leq m \leq 5.0$;
$\rho$ is the density of the reactive resin [Kg/m$^3$] = $800 \leq \rho \leq 1260$
$r_0$ is the radius of the outlet conduit [m] = $0.007 \leq r \leq 0.036$
$\mu$ is the viscosity [Pa*s] = $0.05 \leq \mu \leq 10$,
h is the height of the axis of the outlet conduit from the deposition surface equal to: $0.01 \leq h \leq 0.060$ [m]
"g" is the gravitational acceleration equal to 9.81 [m/s$^2$],
we have established that the jet J supplied is coherent if the ratio between the "Shear rate" at the periphery of the jet and the square of the average integral output velocity exceeds a value, which however is also a function of the viscosity of the mixture. More precisely, in order to obtain a condition of coherence of the jet J, the ratio between the "shear rate" ($\dot{\gamma}$) and the square of the average integral velocity $V_{m,Ecin}$ of said jet "J" must satisfy the following relationship:

$$\frac{\dot{\gamma}}{V^2 m,Ec} > (A + B\,\rho/\mu)$$

where A and B are experimental constants:

"A" is greater than or equal to 52 (A ≥ 52[s/m²])
"B" varies from 0.012 to 0.016 (0.012 ≤ B ≤ 0.016), preferably it is equal to 0.14;
μ is the viscosity of the mixture M expressed in [Pa*s] and ρ is the density expressed in [Kg/m³].

The control unit CU calculates, sets and signals to the operator a higher flow rate value, so that the aforementioned relationship can be respected. In particular, the CU control unit contains in its memory a set of tabulated values that are a function of the jet size, in particular the mixing head output diameter, and of the viscosity, and to which are associated upper flow rate limit conditions within which a laminar/cohesive flow of the jet is guaranteed.

The application of the above formula ensures that jet J is supplied in a non-chaotic manner, that is to say, in the same flow condition at the head output and during the flight; the jet configured in this way, ensures that the deposited mixture M flows along the lower internal surface 14 of the cavity 4, due to the kinetic energy of the jet J, and forms an elongated resin puddle avoiding the incorporation of air bubbles or pockets.

The method provides for causing a forward flow and a distribution of the mixture puddle Z1, Z1' by means of the kinetic energy thrust of the jet J, on the puddle of material scattered on the surface on which it falls, towards a second end 8 of the refrigerator cabinet 2, being opposite to the first end 5, until it reaches (from 50% to 100% of the dimension $D_L$) preferably at least 60% of said length dimension $D_L$ of the foaming cavity 4.

Numerous experimental trials have resulted in the definition of the extension in length of the puddle Z, with a formula obtained by equalling the integral of the average kinetic energy of the output jet rapported with the viscous friction, to which the liquid mixture is subjected when it flows on the internal surface 14 of the cavity 4, and then adding the casting distance Xg,m, i.e. the flight distance travelled by jet J until it enters in contact with the surface 14.

It has been experimentally found that to optimise expansion to obtain a minimum density differential, the front of the puddle Z must reach at least 60% - 70%, of the maximum length $D_L$ of the refrigerator cabinet (in other words the height of a refrigerator intended for normal use, which can be up to about 2200 mm); in addition, initially a first flow rate value Q1 must be used in order to reach from 50% to 100%, preferably from 60% to 100% of the extension in length, then the flow can be reduced to about half (in particular up to 40% of the initial value), with a ramp and in a time between 0.5 sec and 1.5 sec., delivering at the said second halved flow rate value, a mass quantity that varies from 70% to 35% of the mass previously delivered with the first value of flow rate Q1.

The total distance (longitudinally) covered by the puddle Z can be calculated as the sum of two components: a "flight" component, represented by the casting distance $X_{g,m}$, travelled by the jet J in flight until it enters in the contact with the surface 14, and a "sliding" component $X_s$ of the puddle Z1, i.e. viscous sliding on the surface 14, whose size depends on the ratio between the kinetic energy of the output flow from the mouth of the mixing head and the work of the viscous friction forces, which brakes the sliding of the liquid puddle by dissipating the kinetic energy.

Considering the height h of the hollow space 4 (cavity), the casting distance $X_{g,m}$ of the jet J supplied, in coherence conditions, at a velocity $V_{m,Ec}$ and in a tangentially horizontal direction to the outlet of the mouth of the mixing head, is given by the following formula:

$$x_{g,m} = v_{m,E_C}\sqrt{2h/g}$$

Since, generally, the hollow space or cavity 4 of a refrigerator cabinet 2 is not very thick (thickness "h" not greater than 80 mm), it is preferable to insert the mixing head mouth in the position to deliver horizontally, to prevent the jet J from touching the upper surface (upper half-shell 2') causing air intake due to dripping of the surface.

In conditions of non-chaotic flow of the mixture M, that flows at least up to 50% and beyond of the longitudinal extension of the cavity, the following formulas are obtained:

$$X_{tot} = X_{g,m} + X_s$$

$$\begin{cases} x_{g,m} = v_{m,E_C}\sqrt{2h/g} = \dfrac{2}{\sqrt{3}}\dfrac{\dot{m}}{\rho\pi r_0^2}\sqrt{\dfrac{2h}{g}} = \left(\dfrac{\dot{m}}{\rho\pi r_0^2}\right)\sqrt{\dfrac{8h}{3g}} \\ x_s = \dfrac{x_{crs}\rho v_{m,Ec}}{(0.664)^2\mu k^2} = \dfrac{2}{(0.664)^2\sqrt{3}}\left(\dfrac{x_{crs}\dot{m}}{\mu k^2\pi r_0^2}\right)(1-e^{-\alpha t}) \end{cases}$$

9

Where K=K₁.K_par

K is an adimensional term composed of the product of the terms K1 and $K_{par}$.

The terms K1 derives from experimental trials carried out with the heads varying the flow rates and measuring the final front of the liquid puddle. $K_1$ can vary from 2 to 2.6 ($2 \leq K_1 \leq 2.6$).

$K_{par}$, is a parameter term that depends on the geometry of the outlet conduit and the kinematic viscosity of the resin

$$K_{par} = x_{crs}/[0{,}664 \sqrt{\frac{\rho}{\mu}}]$$

Where "ρ" is the density of the liquid mixture M,

"$r_0$" is the radius of the exit cross-section of the mixing head,

"m" is the mass flow rate,

"$\mu$" is the dynamic viscosity of the resin,

"h" is the height of the average cross-section of the outlet conduit,

"g" is the gravitational acceleration,

"$X_{crs}$" is the length of the outlet conduit and it can be between $6 \cdot r_0 \leq X_{crs} \leq 30 \cdot r_0$, and wherein the term $[1-e^{-\alpha t}]$ is a transient time factor (equal to 0 for t=0, and 1 for $t \to \infty$) on which the flow of the puddle (Z) versus time in seconds depends.

The term "$\alpha$" has been experimentally measured and varies from 0.2 to 0.5, preferably from 0.3 to 0.4 and dimensionally it is expressed in [1/s].

Thanks to the jet J in coherent regime, a more extended distribution of the puddle Z is obtained, since the jet first travels along a flying path portion and then is able to push forward the resin already layered on the surface 14, by virtue of the momentum possessed by the jet J.

In particular, the present method provides for the supply of the jet J at a first flow rate value Q1, so that the puddle (Z1, Z1') reaches an area between 50% and 100%, preferably over 60%, of the length dimension $D_L$ of the refrigerator cabinet 2, and later it is provided to reduce the flow rate to a second value Q2 equal to about half of said first value Q1 with a ramp and in a time between 0.5 sec and 1.5 sec, thus dispensing a second quantity of polyurethane mixture between 35% and 70% of the quantity dispensed with the first value Q1 of flow rate.

In other words, with reference to Figure 1, the puddle Z, which in an initial deposition stage is indicated by Z1, evolves forward, taking on a larger form as indicated by Z1'. Subsequently, the second delivery takes place at the flow rate Q2, which generates the other pool Z2, while in the meantime, the dashed lines in the figure indicate the isometric expansion lines of the mixture already deposited, which joins the foam generated by the mixture gradually deposited in the most backward area (towards the first end 5 of the cabinet 2).

The entire process is supported and controlled by the control unit CU which, together with the pressure transducer means 18A, 18B, and the mass or volume flow rate detection means 16A, 16B, which continuously measure the mass or volume flow and pressure values of each component A, B, acts on the dosing units 12A, 12B to control the ratio between the components and the flow rate of jet J dispensed, maintaining the reaction ratio constant as the flow varies.

Once the reactive resin has been distributed on the flat surface in the manner described, the chemical reaction of the components and the heat transferred from the surface on which the puddle has formed, promotes the development of the gases that generate the foam and its expansion.

Expansion and consequent sliding is opposed by the air pressure inside the cavity.

The combined and synergistic use of depression (pressure reduction), delivery of the jet J in coherence conditions, and thermostating action (initial warming and heat subtraction in the final stage), makes it possible to achieve a significant improvement in the distribution and expansion of the foam, in particular a faster flow is achieved as well as a more homogeneous density distribution.

The pressure reduction can be further enhanced during the final filling phase, particularly when the foam front must fill the cavity areas furthest away from the deposition zone, such as corner areas that are defined between the mutually orthogonal edges of a first wall, and the edge of a second wall (e.g. horizontal upper wall or horizontal lower wall in the normal operating position of the refrigerator). The final filling is followed by the so-called "overpacking" (where the term "overpacking" refers to the final settling phase whereby the foam finally slides towards the points of lower expansion pressure and this is achieved by filling in excess, up to a certain percentage - for example from 10% to 30% - above the minimum quantity injected required to fill all recesses, the so-called "minimum fill" condition).

The gas pressure that develops in the cells during the reaction caused by heating and self-generation makes the foam slide. The said sliding is counteracted by shear stress, caused by the increasing viscosity of the foam, the adhesion of the peripheral layers to the walls on which it flows and by the air pressure on the foam front that moves forward.

The shorter the foam path, the less the gas pressure difference within the cells, from the centre of expansion towards the periphery (the difference necessary to overcome the shear stress), and the greater the sliding speed. The lower the counteracting air pressure, the greater the filling rate until it is completely full, and the lower the average pressure of the foam cells during sliding.

Since there is an increase in foam viscosity, during the chemical reaction, until it has solidified, the reaction formulation is calibrated so that the solidification takes place a few seconds after the final overpacking.

Production time is therefore reduced by favouring the rapid flow of foam by means of depression, and the total quantity of foam required is less while leaving the overpacking unchanged, thus allowing the foam to slide at a lower average pressure.

Depression can be applied before the insertion of the reactive mixture, which is distributed in an optimal manner by varying its kinetic energy and maintaining it in a coherent flow regime.

The depression value can be maintained unchanged during expansion or it can be modulated by increasing it up to 20% higher than the initial value when foam expansion has reached at least 70% of the total filling and hence it has reached a higher apparent viscosity, which requires a lower counteracting atmospheric pressure to allow the foam to slide rapidly.

A more accentuated depression in the final stages, therefore contributes to faster filling of the cavity 4.

Upon completion of the injection of the mixture M, the heat subtraction, carried out by the heat transfer fluid circulating in table 6, facilitates the final shape stabilization phase, making the demolding operation of the refrigerator cabinet 2 faster.

At this point, the containment mold 3 is opened, the auxiliary frame 42 is lowered, and the cabinet 2 is transferred on the roller conveyor 50 where it is once again picked up by the gripping and transfer device 25 and taken away.

From the above description and figures, it is evident that the method and apparatus 1, according to the invention, achieve the aims set of speeding up (with consequent advantages in terms of production) and improving the distribution of the polyurethane mixture in the cavity of the hollow body, in particular of the refrigerator cabinet, while ensuring an isometric expansion of the polyurethane foam without bubble formation. A finer cell formation is obtained, with greater insulating power, improved mechanical and structural characteristics; in addition the consumption of injected polyurethane material is reduced.

In particular, the following advantages are highlighted which result from the synergistic combination:

- of the particular supply and distribution method of the resin on the internal surface 14,
- with the heat conditioning phase of the whole refrigerator cabinet but more specifically of its lower wall (in particular the internal surface 14 that receives the resin), supported by the thermostating table 6, that promotes and maintains a homogeneous expansion,
- and with the depression applied to the foaming cell.

The aforementioned advantages have a positive influence on the increase in foam reactivity, with a consequent reduction in processing times and increase in productivity, the reduction in the size of the foam cells with an associated reduction of the conductivity and the favourable distribution of foam density, which reaches the condition of "minimum fill" and of consequent overpacking with a very homogeneous density distribution and a reduction in the injected quantity between 1% and 5%, leaving the overpacking unchanged.

What has been stated and shown in the attached drawings has been provided to illustrate the innovative characteristics of the foaming apparatus 1 and other changes may be made to the apparatus 1, or parts of it, without however departing from the claims.

In other words, when the materials are compatible with a specific use and with the respective single elements to which they are destined, they can be duly selected according to the requirements and according to the state of the technique available.

The apparatus 1 can be configured and sized, with possible variations and/or additions to what is described above and shown in the annexed drawings.

## Claims

1. A method for foaming a hollow body (2), particularly a refrigerator cabinet (2), being closed in a containment mold (3), said hollow body (2) including a first half-shell (2') and a second half-shell (2") defining a foaming cavity (4) having a prevailing length dimension ($D_L$), wherein a highly reactive chemical mixture of a first (A) and at least one second (B) polymeric component is injected from a first end (5) of said hollow body (2) on an internal surface (14) of the lower half-shell (2") by deposing it on different areas and letting it expand under vacuum conditions, wherein said hollow body (2), before being inserted in said containment mold (3), is pre heated,
**characterized by** the steps of

- keeping said internal surface (14) of said hollow body (2) suitably preheated by supporting it with a thermostating-supporting- table (6) during the insertion and the permanence in said containment mold (3);
- moving said thermostating-supporting-table (6), supporting said hollow body (2), from a position outside said containment mold (3) to an internal position in which said hollow-body (2) is housed in said containment mold (3),
- circulating in said thermostating-supporting-table (6) a heat transfer fluid provided by a thermal source (13) for thermostating said hollow-body (2), said fluid flowing in conduits (13A, 13B) that are of flexible type for following a horizontal and vertical movements of said thermostating-supporting-table (6),
- heating, or maintaining at an adequate temperature by said heat transfer fluid both said internal surface (14) on which the resin is deposited and, by means of said flexible conduits, the other walls of said hollow body (2) both during the insertion and stay in said containment mold (3),
- keeping said hollow body (2) enclosed within said containment mold (3) in an air-tight condition,
- injecting from said first end (5) a first dosed quantity of reactive mixture generating a coherent jet (J) of mixture (M) having an initial value of mass flow rate ($\dot{m}_i$) and average kinetic energy ($E_{cin,sp}$) of the jet (J);
- forming a mixture puddle (Z1) in an intermediate area (7) of said foaming cavity (4) by keeping the coherence conditions of the mixture jet (J) during the injection;
- causing a forward sliding and a distribution of the mixture puddle (Z1, Z1') by means of the kinetic energy thrust of the jet (J) towards a second end (8) of said foaming cavity (4) being opposite to said first end (5), and an extension of the puddle of mixture (M) until the front reaches at least 50%, preferably at least 60%, of said length dimension ($D_L$) of said foaming cavity (4);
- continuing the injection of the reactive mixture (M) and completing the introduction of resin needed to fill with over-packing the cavity (4) of said hollow body (2) by reducing the mass flow rate ($\dot{m}_i$) and the average kinetic energy ($E_{cin,sp}$) under coherence conditions of the jet (J), by keeping said hollow body (2) thermostated and closed in said containment mold (3) under conditions of internal pressure reduced with respect to the external environment during the expansion and polymerization of the reactive mixture (M).

2. The method according to claim 1, wherein the coherence conditions of said jet (J), having a viscosity ($\mu$), are achieved by keeping the ratio between "shear rate" ($\dot{\gamma}$) and square of the integral average velocity $V_{m,Ecin}$ of said jet (J) according to the following relationship:

$$\frac{\dot{\gamma}}{V^2_{m,Ec}} > (A + B\ \rho/\mu)$$

where A and B are experimental constants with

- $A \geq 52\ [s/m^2]$,
- $0.012 \leq B \leq 0.016$
- $\mu$ is the viscosity of the mixture M in [Pa-s]
- $\rho$ is the density in Kg/m$^3$,

and where said "shear rate" ($\dot{\gamma}$) indicates the laminar flow velocity gradient at the outlet of a cylindrical outflow conduit of a high pressure mixing device (10) , said gradient depending on the radius (R) of said cylindrical outflow conduit, on the flow rate and the viscosity of the fluid, and is defined by the following relationship:

$$Sr = \frac{dv_{zm}}{dr}$$

where $v_{zm}$ is the velocity of the fluid along the longitudinal direction of the conduit
and where the integral average velocity $V_{m,Ecin}$ is:

$$v_{m,E_c} = \frac{2}{\sqrt{3}} \frac{\dot{m}}{\rho \pi r_0^2} \qquad \left[\frac{m}{s}\right]$$

and $r_0$ is the radius of the outlet conduit [m] = $0.007 \leq r \leq 0.036$.

3. The method according to claim 1 or 2, wherein in said foaming cavity (4) it is provided to make a certain vacuum level between 600 and 900 absolute millibars in order to increment the expansion speed of the reactive resin.

4. The method according to any one of claims 1 to 3, wherein it is provided a gradual decrease of the internal depression in said hollow body (2) starting from reaching 85% filling of said cavity (4) with foam until the complete filling of said cavity (4).

5. The method according to any one of the preceding claims, wherein said jet (J), having a density ($\rho$), is dispensed in coherence conditions along a trajectory having an exit angle from 0 to 15 degrees with respect a horizontal plane, at a height (h) with respect to an internal surface (14) of the lower half-shell (2"), with an average integral exit velocity $V_{m,Ecin}$, so that the sum of the maximum flight distance ($X_{g,m}$) achieved by the jet (J) - i.e. the casting distance ($X_{g,m}$) travelled by the jet (J) in flight until it enters in the contact with said internal surface (14) - plus the sliding distance (Xs) of the front of the mixture puddle (Z) - i.e. the viscous sliding on the internal surface (14)-due to the thrust of the jet (J) itself - is at least equal to 50%, preferably at least equal to 60%, of said length dimension ($D_L$), wherein said maximum flight distance ($X_{g,m}$) and said sliding distance (Xs) satisfy the following laws:

$$X_{tot} = X_{g,m} + X_s$$

$$\begin{cases} x_{g,m} = v_{m,E_c}\sqrt{2h/g} = \frac{2}{\sqrt{3}}\frac{\dot{m}}{\rho\pi r_0^2}\sqrt{\frac{2h}{g}} = \left(\frac{\dot{m}}{\rho\pi r_0^2}\right)\sqrt{\frac{8h}{3g}} \\ x_s = \frac{x_{crs}\rho v_{m,E_c}}{(0.664)^2\mu k^2} = \frac{2}{(0.664)^2\sqrt{3}}\left(\frac{x_{crs}\dot{m}}{\mu k^2\pi r_0^2}\right)(1 - e^{-\alpha t}) \end{cases}$$

where

$\dot{m}$ is the mass flow rate,
$r_0$ is the radius of the exit cross-section of the mixing head,
$\mu$ is the dynamic viscosity of the resin,
h is the height of the average cross-section of the outlet conduit,
$X_{crs}$ is the length of the outlet conduit and it is equal to $6 \cdot r_0 \leq X_{crs} \leq 30 \cdot r_0$,
g is the gravitational acceleration,
K is a dimensionless term and it is equal to $K = K_1 K_{par}$, where $K_1$ derives from experimental trials being carried out varying the flow rate and measuring the final front of the liquid puddle and it can vary from 2 to 2.6 and $K_{par}$, which depends on the geometry of the outlet conduit and the kinematic viscosity of the resin, and is expressed by the relationship

$$K_{par} = x_{crs}/[0,664\sqrt{\frac{\rho}{\mu}}]$$

and wherein the term $[1-e^{-\alpha t}]$ is a transient time factor (equal to 0 for t=0, and 1 for $t \rightarrow \infty$) on which the flow of the puddle (Z) versus time in seconds depends, with $\alpha$ between 0.2 and 0.5 [1/s].

6. The method according to any one of claims 1 to 5, wherein said heat transfer fluid - circulating in said supporting table (6) for thermostating said internal surface (14) on which the reactive resin is poured - is at a temperature ($T_{contr}$) such to transfer heat to said internal surface (14) during the insertion and a first time period in said containment mold (3) during which the injection and filling of said cavity (4) occur, and later such to extract heat from said internal surface of the hollow body (2) during a second time interval for completing and stabilizing the foam-shape in said cavity (4).

7. The method according to one or more of the preceding claims, wherein it is provided to dispense said jet (J) with a flow rate having a first upper value (Q1) so that the front of said puddle (Z1, Z1') reaches an area between 50% and 100% of said length dimension ($D_L$) of the hollow body (2), and later it is provided to reduce the flow rate to a second value (Q2) equal to about half of said first value (Q1) with a ramp and in a time between 0.5 sec and 1.5 sec, and to dispense a quantity of polyurethane mixture between 35% and 70% of the quantity being dispensed with the first value (Q1) of flow rate.

8. The method according to claim 7, wherein it is provided continuously measuring the values of mass or volume flow rate and pressure of each of said components (A, B), in order to control the kinetic energy and flow rate of said jet (J) exiting the high pressure mixing device (10) and wherein the mixture puddle (Z1, Z1', Z2..) is distributed in order to obtain an isometric expansion of the resulting polyurethane foam in said cavity (4) of said hollow body (2).

9. The method according to any one of the preceding claims, wherein dosed quantities of said first (A) and said at least one second (B) chemically reactive polyurethane component, are fed, with a constant reaction ratio, to a high pressure mixing device (10), having injection nozzles (15A, 15B) for the respective individual polyurethane components (A, B), wherein each injection nozzle (15A, 15B) is operatively connected with a storage reservoir (11A, 11B) of the respective polyurethane component (A, B) by means of a corresponding dosing pump (12A, 12B), wherein each dosing pump (12A, 12B) is commanded by a motor that is operatively connected to a programmable electronic control unit (CU), and wherein it is provided:

- to set variation data of the reference flow rate ($Q_R$) for the polyurethane components (A, B) in said electronic control unit (CU) and,
- to calculate and store, by means of said electronic control unit (20), the flow rates of the individual components (A, B) to be fed to said nozzles (15A, 15B),
- to vary the flow rate of each component (A, B), keeping a preset reaction ratio, and
- consequently, to vary the injection velocity of the resulting mixture jet (J) in the cavity (4) of said hollow body (2), by adjusting the flow rate of each individual component (A, B) being fed to said high pressure mixing device (10) as a function of the variable reference flow rate ($Q_R$) that is stored in said electronic control unit (CU).

10. An apparatus suitable to inject a highly reactive chemical mixture (M) of a first (A) and at least one second (B) polymeric component in a foaming cavity (4) of a hollow body (2) by means of the method of claim 1, the apparatus (1) including:

- a containment mold (3) being shaped to receive said hollow body (2) longitudinally extending in a horizontal position, said mold (3) being provided with lateral walls configured to contain, oppose and thermally condition said hollow body (2);
- said containment mold (3) defining a foaming cell for said hollow body (2) and being configured with gaskets for enclosing said hollow body (2) in an air-tight condition,
- a programmable control unit (CU),
- a high pressure mixing device (10) for the polymeric components (A, B), configured to inject a jet (J) of reactive mixture in said cavity (4) of said hollow body (2) being closed in said containment mold (3), said mixing device (10) being operatively connected to storage reservoirs (11A, 11B) of said polymeric components (A, B) by means of respective dosing pump units (12A, 12B) being operatively connected to said control unit (CU);
- a thermostating-supporting-table (6) for said hollow body (2), being movable between an external position and an internal position with respect to said containment mold (3);
- vacuum generation means (30) configured to reduce the pressure in the cavity (4) of said hollow body (2),

**characterized in that** it further comprises:

- thermostating means (13), operatively coupled with said control unit (CU), being arranged to circulate a heat transfer fluid in said thermostating-supporting-table (6) in order to control - both during the insertion and stay of the hollow body (2) in said containment mold (3) - the temperature of the internal surface (14) on which the reactive resin is deposited and a first expansion occurs, and of the other walls of said hollow body (2),
- said thermostating means (13) comprising a thermal source (13) operatively connected to said thermostating-supporting-table (6) by external flexible conduits (13A, 13B) configured for following horizontal and vertical movements of said thermostating-supporting-table (6) for heating, or maintaining at an adequate temperature, both said internal surface (14) and the other walls of said hollow body (2) both during the insertion and stay in said containment mold (3),

- said control unit (CU) being configured and programmed to verify and enable driving of said vacuum generation means (30) and of said dosing pump units (12A, 12B) in order to control the vacuum level and to verify the coherence conditions of the mixture jet (J) during the injection in said foaming cavity (4), as a function of values of initial mass flow rate ($\dot{m}_i$) and average kinetic energy ($E_{cin,sp}$) of the jet (J),

- said control unit (CU) being configured and programmed to reduce the mass flow rate ($\dot{m}$) and, consequently, the average kinetic energy ($E_{cin,sp}$), in coherence conditions, of said jet (J) during the pouring and the following expansion and polymerization of the reactive mixture (M) in said cavity (4) of the hollow body (2).

11. The apparatus according to claim 10, wherein said thermal source (13) is operatively connected to said thermostating-supporting-table (6) by means of flexible external conduits (13A) being arranged to circulate said heat transfer fluid for thermally conditioning said internal surface (14), said thermal source (13) being connected by means of further flexible external conduits (13B) to containment walls of said containment mold (3).

12. The apparatus according to claim 10 or 11, wherein said vacuum generation means (30), operatively connected with said control unit (CU), include a vacuum reservoir, valve elements and a suction device, for generating the required vacuum or depression level that is needed to help the distribution and development of the foam in said cavity (4) of said hollow body (2) in the sealingly closed configuration of said containment mold (3).

13. The apparatus according to any one of claims 10 to 12, wherein said high pressure mixing device (10) includes supply nozzles (15A, 15B) for the individual polyurethane components (A, B) and it is configured to feed the polyurethane components (A, B) to a mixing chamber in a way suitable to generate a turbulence mixing, wherein said nozzles (15A, 15B), by means of respective supply lines (16A, 16B), are connected with respective dosing pumps (12A, 12B) for supplying the polyurethane components, which are actuated by respective motor means (M1, M2) that are operatively connected with said electronic control unit (CU).

14. The apparatus according to any one of claims 10 to 13, also including mass or volume flow rate detection means (17A, 17B) arranged for detecting the flow rates ($Q_A$, $Q_B$) of the individual polyurethane components (A, B) being fed to the high pressure mixing device (10) on the respective supply lines (16A, 16B), and for providing a signal of the detected flow rate to a respective input ($I_A$, $I_B$) of the electronic control unit (CU).

15. The apparatus according to any one of claims 10 to 14, also including pressure transducer means (18A, 18B), being arranged to detect, on the respective supply lines (16A, 16B), the pressure values ($P_A$, $P_B$) of the individual polyurethane components (A, B) being fed to the high pressure mixing device (10), and to provide a signal of the detected pressure to the respective input ($I_A$, $I_B$) of the electronic control unit (CU).

16. The apparatus according to claim 13, or according to claim 14 or 15 as appended to claim 13, wherein said electronic control unit (CU) includes a controller operatively connected with said motor means (M1, M2), said controller including memory means (20A, 20B) being suitable to generate at least one signal ($Q_{RA}$, $Q_{RB}$) of a variable reference flow rate for the polyurethane components (A, B) to be fed to the nozzles (15A, 15B) of the high pressure mixing device (10), said electronic control unit (CU) being programmed by a software suitable to receive as an input the data about the quantity to be dispensed for each area, and the respective flow rate variation of a polyurethane mixture to be dispensed, to calculate and store in said memory means (20A, 20B) of the controller, dispensing times and variations of the flow rates of the individual polyurethane components (A, B) to be fed to said high pressure mixing device (10), and consequently to vary dispensing flow rate, velocity and times of the jet of polyurethane mixture being injected in said cavity (4) of the hollow body (2), according to the signals ($Q_{RA}$, $Q_{RB}$) of variable reference flow rate being generated by the controller and according to the signal of flow rate (QA; QB) being detected for the individual polyurethane components (A, B).

17. The apparatus according to claim 13, or according to any one of claims 14 to 16 as appended to claim 13, wherein said motor means (M1, M2) of said dosing pumps (12A, 12B) are of the alternated current type and are connected to a supply electrical circuit controlling the rotation velocity, and are configured to operate with a variable velocity according to the signals of variable reference flow rate ($Q_{RA}$, $Q_{RB}$) being generated by the software of said control unit (CU) as a function of the programmed flow rate and ratio data.

**Patentansprüche**

1. Verfahren zum Schäumen eines Hohlkörpers (2), insbesondere eines Kühlschranks (2), der in einer Einschlussform (3) eingeschlossen ist, wobei der Hohlkörper (2) eine erste Halbschale (2') und eine zweite Halbschale (2") beinhaltet, die einen Schäumungshohlraum (4) mit einer vorherrschenden Längenabmessung ($D_L$) definieren, wobei ein hochreaktives chemisches Gemisch aus einer ersten (A) und mindestens einer zweiten (B) Polymerkomponente von einem ersten Ende (5) des Hohlkörpers (2) aus auf eine innere Oberfläche (14) der unteren Halbschale (2") gespritzt wird, indem es auf verschiedene Bereiche abgeschieden und unter Vakuumbedingungen zum Expandieren gebracht wird, wobei der Hohlkörper (2), bevor er in die Einschlussform (3) eingesetzt wird, vorgewärmt wird,
**gekennzeichnet durch** die folgenden Schritte:

   - Halten der inneren Oberfläche (14) des Hohlkörpers (2) in geeigneter Weise vorgewärmt, indem sie während des Einsetzens und des Verbleibs in der Einschlussform (3) mit einem Thermostatisier-Stütztisch (6) abgestützt wird;
   - Bewegen des den Hohlkörper (2) abstützenden Thermostatisier-Stütztisches (6) von einer Position außerhalb der Einschlussform (3) in eine innere Position, in welcher der Hohlkörper (2) in der Einschlussform (3) untergebracht ist,
   - Zirkulieren eines von einer Wärmequelle (13) bereitgestellten Wärmeübertragungsfluids in dem Thermostatisier-Stütztisch (6), um den Hohlkörper (2) zu thermostatisieren, wobei das Fluid in Leitungen (13A, 13B) fließt, die vom flexiblen Typ sind, um einer horizontalen und vertikalen Bewegung des Thermostatisier-Stütztisches (6) zu folgen,
   - Erwärmen oder Aufrechterhalten einer angemessenen Temperatur durch das Wärmeübertragungsfluid sowohl der inneren Oberfläche (14), auf der das Harz abgeschieden wird, als auch, mittels der flexiblen Leitungen, der anderen Wände des Hohlkörpers (2) sowohl während des Einsetzens als auch des Aufenthalts in der Einschlussform (3),
   - Halten des Hohlkörpers (2) eingeschlossen innerhalb der Einschlussform (3) in einem luftdichten Zustand,
   - Einspritzen einer ersten dosierten Menge an reaktivem Gemisch aus dem ersten Ende (5), wobei ein kohärenter Strahl (J) des Gemischs (M) erzeugt wird, der einen anfänglichen Wert der Massendurchflussrate ($\dot{m}_i$) und der durchschnittlichen kinetischen Energie ($E_{cin,sp}$) des Strahls (J) aufweist;
   - Bilden einer Gemischpfütze (Z1) in einem Zwischenbereich (7) des Schäumungshohlraums (4) durch Aufrechterhaltung der Kohärenzbedingungen des Gemischstrahls (J) während der Einspritzung;
   - Bewirken eines Vorwärtsgleitens und einer Verteilung der Gemischpfütze (Z1, Z1') mittels des kinetischen Energieschubs des Strahls (J) in Richtung eines zweiten Endes (8) des Schäumungshohlraums (4), das dem ersten Ende (5) gegenüberliegt, und einer Erweiterung der Gemischpfütze (M), bis die Vorderseite mindestens 50%, vorzugsweise mindestens 60%, der Längenabmessung ($D_L$) des Schäumungshohlraums (4) erreicht;
   - Fortsetzen der Einspritzung des reaktiven Gemischs (M) und Abschließen des Einbringens von Harz, das zum Füllen des Hohlraums (4) des Hohlkörpers (2) mit Überfüllung erforderlich ist, durch Reduzieren der Massendurchflussrate ($\dot{m}_i$) und der durchschnittlichen kinetischen Energie ($E_{cin,sp}$) unter Kohärenzbedingungen des Strahls (J), indem der Hohlkörper (2) in der Einschlussform (3) unter Bedingungen eines gegenüber der äußeren Umgebung reduzierten Innendrucks während der Expansion und Polymerisation der reaktiven Mischung (M) thermostatisiert und geschlossen gehalten wird.

2. Verfahren nach Anspruch 1, wobei die Kohärenzbedingungen des Strahls (J), der eine Viskosität ($\mu$) aufweist, dadurch erreicht werden, dass das Verhältnis zwischen der "Scherrate" ($\dot{\gamma}$) und dem Quadrat der integralen Durchschnittsgeschwindigkeit $V_{m,Ecin}$ des Strahls (J) gemäß der folgenden Beziehung aufrechterhalten wird:

$$\frac{\dot{\gamma}}{V^2{m,Ec}} > (A + B\,\rho/\mu)$$

wobei A und B experimentelle Konstanten sind mit

   - $A \geq 52\ [s/m^2]$,
   - $0{,}012 \leq B \leq 0{,}016$
   - $\mu$ die Viskosität des Gemischs M in [Pa s] ist
   - $\rho$ die Dichte in kg/m$^3$ ist,

und wobei die "Scherrate" ($\dot{\gamma}$) den laminaren Fließgeschwindigkeitsgradienten am Auslass einer zylindrischen Ausflussleitung einer Hochdruckmischvorrichtung (10) anzeigt, wobei der Gradient vom Radius (R) der zylindrischen Ausflussleitung, von der Durchflussrate und der Viskosität des Fluids abhängt und durch die folgende Beziehung definiert ist:

$$Sr = \frac{dv_{zm}}{dr}$$

wobei $v_{zm}$ die Geschwindigkeit des Fluids entlang der Längsrichtung der Leitung ist, und wobei die integrale Durchschnittsgeschwindigkeit $V_{m,Ecin}$ ist:

$$v_{m,E_c} = \frac{2}{\sqrt{3}} \frac{\dot{m}}{\rho \pi r_0^2} \qquad \left[\frac{m}{s}\right]$$

und $r_0$ der Radius der Auslassleitung [m] = $0{,}007 \leq r \leq 0{,}036$ ist.

3. Verfahren nach Anspruch 1 oder 2, wobei in dem Schäumungshohlraum (4) ein gewisser Vakuumpegel zwischen 600 und 900 absoluten Millibar bereitgestellt ist, um die Expansionsgeschwindigkeit des reaktiven Harzes zu erhöhen.

4. Verfahren nach einem der Ansprüche 1 bis 3, wobei eine graduelle Verringerung der inneren Vertiefung in dem Hohlkörper (2) bereitgestellt ist, beginnend mit dem Erreichen einer 85%igen Füllung des Hohlraums (4) mit Schaum bis zur vollständigen Füllung des Hohlraums (4).

5. Verfahren nach einem der vorstehenden Ansprüche, wobei der Strahl (J), der eine Dichte ($\rho$) aufweist, unter Kohärenzbedingungen entlang einer Trajektorie mit einem Austrittswinkel von 0 bis 15 Grad in Bezug auf eine horizontale Ebene, in einer Höhe (h) in Bezug auf eine innere Oberfläche (14) der unteren Halbschale (2"), mit einer durchschnittlichen integralen Austrittsgeschwindigkeit $V_{m,Ecin}$ ausgegeben wird, sodass die Summe der maximalen Flugdistanz ($X_{g,m}$), die von dem Strahl (J) erreicht wird - d. h. die Gießdistanz ($X_{g,m}$), die von dem Strahl (J) im Flug durchlaufen wird, bis er mit der inneren Oberfläche (14) in Kontakt kommt - plus die Gleitdistanz (Xs) der Vorderseite der Gemischpfütze (Z) - d. h. das viskose Gleiten auf der inneren Oberfläche (14) - aufgrund des Schubs des Strahls (J) selbst - mindestens gleich 50%, vorzugsweise mindestens gleich 60%, der Längenabmessung ($D_L$) beträgt, wobei die maximale Flugdistanz ($X_{g,m}$) und die Gleitdistanz ($X_S$) die folgenden Gesetze erfüllen:

$$X_{tot} = X_{g,m} + X_s$$

$$\begin{cases} x_{g,m} = v_{m,E_c}\sqrt{2h/g} = \frac{2}{\sqrt{3}}\frac{\dot{m}}{\rho\pi r_0^2}\sqrt{\frac{2h}{g}} = \left(\frac{\dot{m}}{\rho\pi r_0^2}\right)\sqrt{\frac{8h}{3g}} \\ x_s = \frac{x_{crs}\rho v_{m,E_c}}{(0.664)^2 \mu k^2} = \frac{2}{(0.664)^2\sqrt{3}}\left(\frac{x_{crs}\dot{m}}{\mu k^2 \pi r_0^2}\right)(1 - e^{-\alpha t}) \end{cases}$$

wobei

$\dot{m}$ die Massendurchflussrate ist,
$r_0$ der Radius des Austrittsquerschnitts des Mischkopfes ist,
$\mu$ die dynamische Viskosität des Harzes ist,
h die Höhe des durchschnittlichen Querschnitts der Auslassleitung ist,
$X_{crs}$ die Länge der Auslassleitung ist und gleich $6\,r_0 \leq X_{crs} \leq 30\,r_0$ ist,
g die Gravitationsbeschleunigung ist,
Kein dimensionsloser Term ist und gleich $K = K_1 . K_{par}$ ist, wobei $K_1$ aus durchgeführten experimentellen Versuchen stammt, bei denen die Durchflussrate variiert und die Endfront der Flüssigkeitspfütze gemessen wird, und zwischen 2 und 2,6 variieren kann, und

K$_{par}$, der von der Geometrie der Auslassleitung und der kinematischen Viskosität des Harzes abhängt und durch die folgende Beziehung ausgedrückt wird

$$K_{par} = x_{crs}/[0,664\sqrt{\frac{\rho}{\mu}}]$$

und wobei der Term [1-e$^{-\alpha t}$] ein Übergangszeitfaktor (gleich 0 für t=0 und 1 für t → ∞) ist, von dem der Durchfluss der Pfütze (Z) versus Zeit in Sekunden abhängt, mit a zwischen 0,2 und 0,5 [1/s].

6. Verfahren nach einem der Ansprüche 1 bis 5, wobei das Wärmeübertragungsfluid - das in dem Stütztisch (6) zirkuliert, um die innere Oberfläche (14), auf die das reaktive Harz gegossen wird, zu thermostatisieren - eine solche Temperatur (T$_{contr}$) aufweist, dass Wärme auf die innere Oberfläche (14) während des Einsetzens und einer ersten Zeitspanne in der Einschlussform (3) übertragen wird, während der das Einspritzen und Füllen des Hohlraums (4) erfolgt, und später derart, dass der inneren Oberfläche des Hohlkörpers (2) während eines zweiten Zeitintervalls Wärme extrahiert wird, um die Schaumform in dem Hohlraum (4) zu vervollständigen und zu stabilisieren.

7. Verfahren nach einem oder mehreren der vorstehenden Ansprüche, wobei bereitgestellt wird, den Strahl (J) mit einer Durchflussrate mit einem ersten oberen Wert (Q1) auszugeben, sodass die Front der Pfütze (Z1, Z1') einen Bereich zwischen 50% und 100 % der Längenabmessung (D$_L$) des Hohlkörpers (2) erreicht, und später bereitgestellt wird, die Durchflussrate auf einen zweiten Wert (Q2) zu reduzieren, der etwa der Hälfte des ersten Wertes (Q1) entspricht, mit einer Rampe und in einer Zeit zwischen 0,5 Sek. und 1,5 Sek., und eine Menge an Polyurethangemisch zwischen 35 % und 70 % der mit dem ersten Wert (Q1) ausgegebenen Menge auszugeben.

8. Verfahren nach Anspruch 7, wobei ein durchgehendes Messen der Werte von Masse oder Volumendurchflussrate und Druck jeder der Komponenten (A, B) bereitgestellt ist, um die kinetische Energie und die Durchflussrate des die Hochdruckmischvorrichtung (10) verlassenden Strahls (J) zu steuern, und wobei die Gemischpfütze (Z1, Z1', Z2..) verteilt wird, um eine isometrische Expansion des resultierenden Polyurethanschaums in dem Hohlraum (4) des Hohlkörpers (2) zu erhalten.

9. Verfahren nach einem der vorstehenden Ansprüche, wobei dosierte Mengen der ersten (A) und der mindestens einen zweiten (B) chemisch reaktiven Polyurethankomponente mit einem konstanten Reaktionsverhältnis einer Hochdruckmischvorrichtung (10) zugeführt werden, die Einspritzdüsen (15A, 15B) für die jeweiligen einzelnen Polyurethankomponenten (A, B) aufweist, wobei jede Einspritzdüse (15A, 15B) mittels einer entsprechenden Dosierpumpe (12A, 12B) mit einem Speicherreservoir (11A, 11B) der jeweiligen Polyurethankomponente (A, B) wirkverbunden ist, wobei jede Dosierpumpe (12A, 12B) von einem Motor angesteuert wird, der mit einer programmierbaren elektronischen Steuereinheit (CU) wirkverbunden ist, und wobei Folgendes bereitgestellt wird:

   - Einstellen von Variationsdaten der Referenzdurchflussrate (Q$_R$) für die Polyurethankomponenten (A, B) in der elektronischen Steuereinheit (CU) und,
   - Berechnen und Speichern der Durchflussraten der einzelnen Komponenten (A, B), die den Düsen (15A, 15B) zugeführt werden sollen, mittels der elektronischen Steuereinheit (20),
   - Variieren der Durchflussrate jeder Komponente (A, B) unter Beibehaltung eines voreingestellten Reaktionsverhältnisses, und
   - infolgedessen, Variieren der Einspritzgeschwindigkeit des resultierenden Gemischstrahls (J) in den Hohlraum (4) des Hohlkörpers (2) durch Anpassen der Durchflussrate jeder einzelnen Komponente (A, B), die der Hochdruckmischvorrichtung (10) zugeführt wird, als Funktion der variablen Referenzdurchflussrate (Q$_R$), die in der elektronischen Steuereinheit (CU) gespeichert ist.

10. Einrichtung, die geeignet ist, ein hochreaktives chemisches Gemisch (M) einer ersten (A) und mindestens einer zweiten (B) Polymerkomponente in einen Schäumungshohlraum (4) eines Hohlkörpers (2) mittels des Verfahrens nach Anspruch 1 einzuspritzen, wobei die Einrichtung (1) Folgendes beinhaltet:

   - eine Einschlussform (3), die zum Aufnehmen des sich in einer horizontalen Position in Längsrichtung erstreckenden Hohlkörpers (2) geformt ist, wobei die Form (3) mit Seitenwänden bereitgestellt ist, die zum Enthalten, Entgegenwirken und thermischen Konditionieren des Hohlkörpers (2) konfiguriert sind;
   - wobei die Einschlussform (3) eine Schäumungszelle für den Hohlkörper (2) definiert und mit Dichtungen konfiguriert ist, um den Hohlkörper (2) in einem luftdichten Zustand zu umschließen,

- eine programmierbare Steuereinheit (CU),
- eine Hochdruckmischvorrichtung (10) für die Polymerkomponenten (A, B), die zum Einspritzen eines Strahls (J) eines reaktiven Gemischs in den Hohlraum (4) des Hohlkörpers (2), der in der Einschlussform (3) eingeschlossen ist, konfiguriert ist, wobei die Mischvorrichtung (10) mittels jeweiliger Dosierpumpeneinheiten (12A, 12B), die mit der Steuereinheit (CU) wirkverbunden sind, mit Speicherreservoirs (11A, 11B) der Polymerkomponenten (A, B) wirkverbunden ist;
- einen Thermostatisier-Stütztisch (6) für den Hohlkörper (2), der zwischen einer äußeren Position und einer inneren Position in Bezug auf die Einschlussform (3) beweglich ist;
- Vakuumerzeugungsmittel (30), die konfiguriert sind, um den Druck im Hohlraum (4) des Hohlkörpers (2) zu reduzieren,

**dadurch gekennzeichnet, dass** sie weiter Folgendes umfasst:

- Thermostatisier-Mittel (13), die mit der Steuereinheit (CU) wirkgekoppelt und angeordnet sind, um ein Wärmeübertragungsfluid in dem Thermostatisier-Stütztisch (6) zirkulieren zu lassen, um - sowohl während des Einsetzens als auch während des Aufenthalts des Hohlkörpers (2) in der Einschlussform (3) - die Temperatur der inneren Oberfläche (14), auf der das reaktive Harz abgeschieden wird und eine erste Expansion stattfindet, und der anderen Wände des Hohlkörpers (2) zu steuern,
- wobei die Thermostatisier-Mittel (13) eine Wärmequelle (13) umfassen, die mit dem Thermostatisier-Stütztisch (6) durch externe flexible Leitungen (13A, 13B) wirkverbunden ist, die zum Folgen horizontaler und vertikaler Bewegungen des Thermostatisier-Stütztisches (6) konfiguriert sind, um sowohl die innere Oberfläche (14) als auch die anderen Wände des Hohlkörpers (2) sowohl während des Einsetzens als auch während des Aufenthalts in der Einschlussform (3) zu erwärmen oder auf einer angemessenen Temperatur zu halten,
- wobei die Steuereinheit (CU) konfiguriert und programmiert ist, um das Antreiben der Vakuumerzeugungsmittel (30) und der Dosierpumpeneinheiten (12A, 12B) zu überprüfen und zu ermöglichen, um den Vakuumpegel zu steuern und die Kohärenzbedingungen des Gemischstrahls (J) während der Einspritzung in den Schäumungshohlraum (4) zu überprüfen, als Funktion von Werten der anfänglichen Massendurchflussrate ($\dot{m}_i$) und der durchschnittlichen kinetischen Energie ($E_{cin,sp}$) des Strahls (J),
- wobei die Steuereinheit (CU) konfiguriert und programmiert ist, um die Massendurchflussrate (rh) und folglich die durchschnittliche kinetische Energie ($E_{cin,sp}$) unter Kohärenzbedingungen des Strahls (J) während des Gießens und der folgenden Expansion und Polymerisation des reaktiven Gemisches (M) in dem Hohlraum (4) des Hohlkörpers (2) zu reduzieren.

11. Einrichtung nach Anspruch 10, wobei die Wärmequelle (13) mittels flexibler externer Leitungen (13A), die angeordnet sind, um das Wärmeübertragungsfluid zur thermischen Konditionierung der inneren Oberfläche (14) zirkulieren zu lassen, mit dem Thermostatisier-Stütztisch (6) wirkverbunden ist, wobei die Wärmequelle (13) mittels weiterer flexibler externer Leitungen (13B) mit Einschlusswänden der Einschlussform (3) verbunden ist.

12. Einrichtung nach Anspruch 10 oder 11, wobei die Vakuumerzeugungsmittel (30), die mit der Steuereinheit (CU) wirkverbunden sind, ein Vakuumreservoir, Ventilelemente und eine Saugvorrichtung zur Erzeugung des erforderlichen Vakuum- oder Unterdruckpegels beinhalten, der benötigt wird, um die Verteilung und Entwicklung des Schaums in dem Hohlraum (4) des Hohlkörpers (2) in der abdichtend geschlossenen Konfiguration der Einschlussform (3) zu unterstützen.

13. Einrichtung nach einem der Ansprüche 10 bis 12, wobei die Hochdruckmischvorrichtung (10) Zuführdüsen (15A, 15B) für die einzelnen Polyurethankomponenten (A, B) beinhaltet und konfiguriert ist, um die Polyurethankomponenten (A, B) einer Mischkammer in einer Weise zuzuführen, die geeignet ist, eine Verwirbelungsmischung zu erzeugen, wobei die Düsen (15A, 15B) mittels jeweiliger Zuführleitungen (16A, 16B) mit jeweiligen Dosierpumpen (12A, 12B) zum Zuführen der Polyurethankomponenten verbunden sind, die durch jeweilige Motormittel (M1, M2) betätigt werden, die mit der elektronischen Steuereinheit (CU) wirkverbunden sind.

14. Einrichtung nach einem der Ansprüche 10 bis 13, die auch Mittel zum Erkennen von Masse oder Volumendurchflussrate (17A, 17B) beinhaltet, die angeordnet sind, um die Durchflussraten ($Q_A$, $Q_B$) der einzelnen Polyurethankomponenten (A, B), die der Hochdruckmischvorrichtung (10) auf den jeweiligen Zuführleitungen (16A, 16B) zugeführt werden, zu erkennen, und um ein Signal der erkannten Durchflussrate für einen jeweiligen Eingang ($I_A$, $I_B$) der elektronischen Steuereinheit (CU) bereitzustellen.

**15.** Einrichtung nach einem der Ansprüche 10 bis 14, die auch Druckwandlermittel (18A, 18B) beinhaltet, die angeordnet sind, um auf den jeweiligen Zuführleitungen (16A, 16B) die Druckwerte ($P_A$, $P_B$) der einzelnen Polyurethankomponenten (A, B), die der Hochdruckmischvorrichtung (10) zugeführt werden, zu erkennen, und um ein Signal des erkannten Drucks für den jeweiligen Eingang ($I_A$, $I_B$) der elektronischen Steuereinheit (CU) bereitzustellen.

**16.** Einrichtung nach Anspruch 13 oder nach Anspruch 14 oder 15, rückbezogen auf Anspruch 13, wobei die elektronische Steuereinheit (CU) eine Steuervorrichtung beinhaltet, die mit den Motormitteln (M1, M2) wirkverbunden ist, wobei die Steuervorrichtung Speichermittel (20A, 20B) beinhaltet, die geeignet sind, mindestens ein Signal ($Q_{RA}$, $Q_{RB}$) einer variablen Referenzdurchflussrate für die den Düsen (15A, 15B) der Hochdruckmischvorrichtung (10) zuzuführenden Polyurethankomponenten (A, B) zu erzeugen, wobei die elektronische Steuereinheit (CU) durch eine Software programmiert ist, die geeignet ist, als Eingabe die Daten über die für jeden Bereich auszugebende Menge und die jeweilige Durchflussratenvariation einer auszugebenden Polyurethanmischung zu empfangen, um in den Speichermitteln (20A, 20B) der Steuervorrichtung Ausgabezeiten und Variationen der Durchflussraten der einzelnen der Hochdruckmischvorrichtung (10) zuzuführenden Polyurethankomponenten (A, B) zu berechnen und zu speichern, und folglich die Ausgabedurchflussrate, die Geschwindigkeit und die Zeiten des Strahls von Polyurethangemisch, der in den Hohlraum (4) des Hohlkörpers (2) gespritzt wird, gemäß den Signalen ($Q_{RA}$, $Q_{RB}$) der variablen Referenzdurchflussrate, die von der Steuervorrichtung erzeugt werden, und gemäß dem Signal der Durchflussrate ($Q_A$; $Q_B$), die für die einzelnen Polyurethankomponenten (A, B) erkannt wird, zu variieren.

**17.** Einrichtung nach Anspruch 13 oder nach einem der Ansprüche 14 bis 16, rückbezogen auf Anspruch 13, wobei die Motormittel (M1, M2) der Dosierpumpen (12A, 12B) vom Wechselstromtyp sind und mit einer die Drehgeschwindigkeit steuernden elektrischen Zuführschaltung verbunden sind, und konfiguriert sind, um mit einer variablen Geschwindigkeit gemäß den Signalen der variablen Referenzdurchflussrate ($Q_{RA}$, $Q_{RB}$) zu arbeiten, die von der Software der Steuereinheit (CU) als Funktion der programmierten Durchflussrate und Verhältnisdaten erzeugt werden.

**Revendications**

**1.** Procédé de moussage d'un corps creux (2), en particulier d'un réfrigérateur (2), fermé dans un moule de confinement (3), ledit corps creux (2) incluant une première demi-coquille (2') et une seconde demi-coquille (2") définissant une cavité de moussage (4) présentant une dimension de longueur prédominante (DL), dans lequel un mélange chimique hautement réactif d'un premier (A) et d'au moins un second (B) composant polymère est injecté à partir d'une première extrémité (5) dudit corps creux (2) sur une surface interne (14) de la demi-coquille inférieure (2") en le déposant sur différentes zones et en le laissant se dilater dans des conditions de vide, dans lequel ledit corps creux (2), avant d'être inséré dans ledit moule de confinement (3), est préchauffé,
**caractérisé par** les étapes consistant à :

- maintenir ladite surface interne (14) dudit corps creux (2) convenablement préchauffée en la soutenant à l'aide d'une table de support thermostatique (6) pendant l'insertion et le maintien dans ledit moule de confinement (3) ;
- déplacer ladite table de support thermostatique (6), soutenant ledit corps creux (2), d'une position à l'extérieur dudit moule de confinement (3) vers une position interne dans laquelle ledit corps creux (2) est logé dans ledit moule de confinement (3),
- faire circuler dans ladite table de support thermostatique (6) un fluide caloporteur fourni par une source thermique (13) pour thermostatiser ledit corps creux (2), ledit fluide circulant dans des conduits (13A, 13B) qui sont de type flexible pour suivre des mouvements horizontaux et verticaux de ladite table de support thermostatique (6),
- chauffer ou maintenir à une température adéquate par ledit fluide caloporteur à la fois ladite surface interne (14) sur laquelle la résine est déposée et, au moyen desdits conduits flexibles, les autres parois dudit corps creux (2) à la fois pendant l'insertion et le séjour dans ledit moule de confinement (3),
- maintenir ledit corps creux (2) enfermé dans ledit moule de confinement (3) dans un état étanche à l'air,
- injecter à partir de la première extrémité (5) une première quantité dosée de mélange réactif générant un jet cohérent (J) de mélange (M) présentant une valeur initiale de débit massique ($\dot{m}_i$) et d'énergie cinétique moyenne ($E_{cin,sp}$) du jet (J) ;
- former une flaque de mélange (Z1) dans une zone intermédiaire (7) de ladite cavité de moussage (4) en maintenant les conditions de cohérence du jet de mélange (J) pendant l'injection ;
- provoquer un glissement vers l'avant et une distribution de la flaque de mélange (Z1, Z1') au moyen de la poussée d'énergie cinétique du jet (J) vers une seconde extrémité (8) de ladite cavité de moussage (4) opposée à ladite première extrémité (5), et une extension de la flaque de mélange (M) jusqu'à ce que le front atteigne au moins 50%, de préférence au moins 60%, de ladite dimension de longueur $(D_L)$ de ladite cavité de moussage (4) ;

- poursuivre l'injection du mélange réactif (M) et terminer l'introduction de la résine nécessaire au remplissage par suremballage de la cavité (4) dudit corps creux (2) en réduisant le débit massique $(\dot{m}_i)$ et l'énergie cinétique moyenne $(E_{cin,sp})$ dans des conditions de cohérence du jet (J), en maintenant ledit corps creux (2) thermostaté et fermé dans ledit moule de confinement (3) dans des conditions de pression interne réduite par rapport à l'environnement extérieur lors de l'expansion et de la polymérisation du mélange réactif (M).

2. Procédé selon la revendication 1, dans lequel les conditions de cohérence dudit jet (J), présentant une viscosité $(\mu)$, sont obtenues en maintenant le rapport entre le "taux de cisaillement" (y) et le carré de la vitesse moyenne intégrale $V_{m,Ecin}$ dudit jet (J) selon la relation suivante :

$$\frac{\dot{\gamma}}{V^2_{m,Ec}} > (A + B\,\rho/\mu)$$

où A et B sont des constantes expérimentales avec

- $A \geq 52$ [s/m$^2$],
- $0,012 \leq B \leq 0,016$
- $\mu$ est la viscosité du mélange M en [Pa s]
- $\rho$ est la densité en Kg/m$^3$,

et où ledit "taux de cisaillement" (y) indique le gradient de vitesse d'écoulement laminaire à la sortie d'un conduit d'écoulement cylindrique d'un dispositif de mélange à haute pression (10), ledit gradient dépendant du rayon (R) dudit conduit d'écoulement cylindrique, du débit et de la viscosité du fluide, et est défini par la relation suivante :

$$Sr = \frac{dv_{zm}}{dr}$$

où $v_{zm}$ est la vitesse du fluide le long de la direction longitudinale du conduit et où la vitesse moyenne intégrale $V_{m,Ecin}$ est :

$$v_{m,E_c} = \frac{2}{\sqrt{3}}\frac{\dot{m}}{\rho\pi r_0^2} \qquad \left[\frac{m}{s}\right]$$

et $r_0$ est le rayon du conduit de sortie [m] = $0,007 \leq r \leq 0,036$.

3. Procédé selon la revendication 1 ou 2, dans lequel la cavité de moussage (4) est pourvue d'un certain niveau de vide entre 600 et 900 millibars absolus afin d'augmenter la vitesse d'expansion de la résine réactive.

4. Procédé selon l'une quelconque des revendications 1 à 3, dans lequel il est prévu une diminution progressive de la dépression interne dans ledit corps creux (2) à partir d'un remplissage à 85 % de ladite cavité (4) avec de la mousse jusqu'au remplissage complet de ladite cavité (4).

5. Procédé selon l'une quelconque des revendications précédentes, dans lequel ledit jet (J), présentant une densité $(\rho)$, est distribué dans des conditions de cohérence le long d'une trajectoire présentant un angle de sortie de 0 à 15 degrés par rapport à un plan horizontal, à une hauteur (h) par rapport à une surface interne (14) de la demi-coquille inférieure (2"), avec une vitesse moyenne intégrale de sortie $V_{m,Ecin}$, de sorte que la somme de la distance de vol maximale $(X_{g,m})$ atteinte par le jet (J) - à savoir la distance de coulée $(X_{g,m})$ parcourue par le jet (J) en vol jusqu'à ce qu'il entre en contact avec ladite surface interne (14) - plus la distance de glissement $(X_s)$ du front de la flaque de mélange (Z) - à savoir le glissement visqueux sur la surface interne (14) - dû à la poussée du jet (J) lui-même - est au moins égale à 50 %, de préférence au moins égale à 60 %, de ladite dimension de longueur $(D_L)$, dans lequel ladite distance de vol maximale $(X_{g,m})$ et ladite distance de glissement $(X_s)$ satisfont aux lois suivantes :

$$X_{tot} = X_{g,m} + X_s$$

$$\begin{cases} x_{g,m} = v_{m,E_c}\sqrt{2h/g} = \dfrac{2}{\sqrt{3}}\dfrac{\dot{m}}{\rho\pi r_0^2}\sqrt{\dfrac{2h}{g}} = \left(\dfrac{\dot{m}}{\rho\pi r_0^2}\right)\sqrt{\dfrac{8h}{3g}} \\[2mm] x_s = \dfrac{x_{crs}\rho v_{m,E_c}}{(0.664)^2\mu k^2} = \dfrac{2}{(0.664)^2\sqrt{3}}\left(\dfrac{x_{crs}\dot{m}}{\mu k^2\pi r_0^2}\right)(1 - e^{-\alpha t}) \end{cases}$$

où

$\dot{m}$ est le débit massique,
$r_0$ est le rayon de la section transversale de sortie de la tête de mélange,
$\mu$ est la viscosité dynamique de la résine,
h est la hauteur de la section transversale moyenne du conduit de sortie,
$X_{crs}$ est la longueur du conduit de sortie et elle est égale à 6 $r_0 \le X_{crs} \le 30\ r_0$,
g est l'accélération gravitationnelle,
K est un terme sans dimension et est égal à K=$K_1$.$K_{par}$, où $K_1$ découle des essais expérimentaux effectués en faisant varier le débit et en mesurant le front final de la flaque de liquide et il peut varier entre 2 et 2,6 et $K_{par}$, qui dépend de la géométrie du conduit de sortie et de la viscosité cinématique de la résine, et s'exprime par la relation suivante

$$K_{par} = x_{crs}/[0{,}664\sqrt{\dfrac{\rho}{\mu}}]$$

et dans lequel le terme [1-$e^{-\alpha t}$] est un facteur de temps transitoire (égal à 0 pour t=0, et à 1 pour t -> ∞) dont dépend le débit de la flaque (Z) en fonction du temps en secondes, avec une valeur comprise entre 0,2 et 0,5 [1/s].

6. Procédé selon l'une quelconque des revendications 1 à 5, dans lequel ledit fluide caloporteur - circulant dans ladite table de support (6) pour thermostater ladite surface interne (14) sur laquelle la résine réactive est versée - est à une température ($T_{contr}$) telle qu'il transfère de la chaleur à ladite surface interne (14) pendant l'insertion et une première période de temps dans ledit moule de confinement (3) au cours de laquelle l'injection et le remplissage de ladite cavité (4) se produisent, et plus tard telle pour extraire la chaleur de ladite surface interne du corps creux (2) pendant un second intervalle de temps pour terminer et stabiliser la forme de mousse dans ladite cavité (4).

7. Procédé selon l'une quelconque ou plusieurs des revendications précédentes, dans lequel il est prévu de distribuer ledit jet (J) avec un débit présentant une première valeur supérieure (Q1) de sorte que le front de ladite flaque (Z1, Z1') atteigne une surface comprise entre 50% et 100 % de ladite dimension de longueur ($D_L$) du corps creux (2), puis il est prévu de réduire le débit à une seconde valeur (Q2) égale à environ la moitié de ladite première valeur (Q1) avec une rampe et dans un temps compris entre 0,5 sec et 1,5 sec, et de distribuer une quantité de mélange de polyuréthane comprise entre 35 % et 70% de la quantité distribuée avec la première valeur (Q1) du débit.

8. Procédé selon la revendication 7, dans lequel il est prévu de mesurer en continu les valeurs de débit massique ou volumique et de pression de chacun desdits composants (A, B), afin de commander l'énergie cinétique et le débit dudit jet (J) sortant du dispositif de mélange à haute pression (10) et dans lequel la flaque de mélange (Z1, Z1', Z2...) est répartie de manière à obtenir une expansion isométrique de la mousse de polyuréthane résultante dans ladite cavité (4) dudit corps creux (2).

9. Procédé selon l'une quelconque des revendications précédentes, dans lequel des quantités dosées dudit premier (A) et dudit au moins second (B) composant de polyuréthane chimiquement réactif sont introduites, avec un rapport de réaction constant, dans un dispositif de mélange à haute pression (10), présentant des buses d'injection (15A, 15B) pour les composants individuels de polyuréthane respectifs (A, B), dans lequel chaque buse d'injection (15A, 15B) est reliée de manière opérationnelle à un réservoir de stockage (11 A, 11B) du composant de polyuréthane respectif (A, B) au moyen d'une pompe de dosage correspondante (12A, 12B), dans lequel chaque pompe de dosage (12A, 12B) est commandée par un moteur qui est relié de manière opérationnelle à une unité de commande électronique programmable (CU), et dans lequel les étapes suivantes sont prévues :

- définir des données de variation du débit de référence (QR) pour les composants de polyuréthane (A, B) dans ladite unité de commande électronique (CU) et,
- calculer et stocker, au moyen de l'unité de commande électronique (20), les débits des composants individuels (A, B) devant être acheminés vers lesdites buses (15 A, 15B),
- faire varier le débit de chaque composant (A, B), tout en maintenant un rapport de réaction préétabli, et
- par conséquent, faire varier la vitesse d'injection du jet de mélange résultant (J) dans la cavité (4) dudit corps creux (2), en ajustant le débit de chaque composant individuel (A, B) acheminé vers ledit dispositif de mélange à haute pression (10) en fonction du débit de référence variable ($Q_R$) qui est stocké dans ladite unité de commande électronique (CU).

10. Appareil approprié pour injecter un mélange chimique hautement réactif (M) d'un premier (A) et d'au moins un second (B) composant polymère dans une cavité moussante (4) d'un corps creux (2) au moyen du procédé selon la revendication 1, l'appareil (1) incluant :

- un moule de confinement (3) formé pour recevoir ledit corps creux (2) s'étendant longitudinalement dans une position horizontale, ledit moule (3) étant pourvu de parois latérales configurées pour contenir, opposer et conditionner thermiquement ledit corps creux (2) ;
- ledit moule de confinement (3) définissant une cellule de moussage pour ledit corps creux (2) et étant configuré avec des joints d'étanchéité pour enfermer ledit corps creux (2) dans un état étanche à l'air,
- une unité de commande programmable (UC),
- un dispositif de mélange à haute pression (10) pour les composants polymères (A, B), configuré pour injecter un jet (J) de mélange réactif dans ladite cavité (4) dudit corps creux (2) étant fermé dans ledit moule de confinement (3), ledit dispositif de mélange (10) étant relié de manière opérationnelle à des réservoirs de stockage (11 A, 11B) desdits composants polymères (A, B) au moyen d'unités de pompe de dosage respectives (12A, 12B) reliées de manière opérationnelle à ladite unité de commande (CU) ;
- une table de support thermostatique (6) pour ledit corps creux (2), pouvant être déplacée entre une position externe et une position interne par rapport audit moule de confinement (3) ;
- des moyens de génération de vide (30) configurés pour réduire la pression dans la cavité (4) dudit corps creux (2),

**caractérisé en ce qu'**il comprend en outre :

- des moyens de thermostatisation (13), couplés de manière opérationnelle avec ladite unité de commande (CU), agencés pour faire circuler un fluide de transfert de chaleur dans ladite table de support thermostatique (6) afin de commander - à la fois pendant l'insertion et le séjour du corps creux (2) dans ledit moule de confinement (3) - la température de la surface interne (14) sur laquelle la résine réactive est déposée et une première expansion se produit, ainsi que celle des autres parois dudit corps creux (2),
- lesdits moyens de thermostatisation (13) comprennent une source thermique (13) reliée de manière opérationnelle à ladite table de support thermostatique (6) par des conduits flexibles externes (13A, 13B) configurés pour suivre des mouvements horizontaux et verticaux de ladite table de support thermostatique (6) afin de chauffer, ou de maintenir à une température adéquate, à la fois ladite surface interne (14) et les autres parois dudit corps creux (2) à la fois pendant l'insertion et le séjour dans ledit moule de confinement (3),
- ladite unité de commande (CU) étant configurée et programmée pour vérifier et permettre le pilotage desdits moyens de génération de vide (30) et desdites unités de pompe de dosage (12A, 12B) afin de commander le niveau de vide et de vérifier les conditions de cohérence du jet de mélange (J) lors de l'injection dans ladite cavité moussante (4), en fonction de valeurs du débit massique initial ($\dot{m}_i$) et de l'énergie cinétique moyenne ($E_{cin,sp}$) du jet (J),
- ladite unité de commande (CU) étant configurée et programmée pour réduire le débit massique (rh) et, par conséquent, l'énergie cinétique moyenne (ECm,sp), dans des conditions de cohérence, dudit jet (J) pendant la coulée et l'expansion et la polymérisation suivantes du mélange réactif (M) dans ladite cavité (4) du corps creux (2).

11. Appareil selon la revendication 10, dans lequel ladite source thermique (13) est reliée de manière opérationnelle à ladite table de support thermostatique (6) au moyen de conduits externes flexibles (13A) agencés pour faire circuler ledit fluide de transfert de chaleur afin de conditionner thermiquement ladite surface interne (14), ladite source thermique (13) étant reliée au moyen d'autres conduits externes flexibles (13B) aux parois de confinement dudit moule de confinement (3).

**12.** Appareil selon la revendication 10 ou 11, dans lequel lesdits moyens de génération de vide (30), reliés de manière opérationnelle à ladite unité de commande (CU), incluent un réservoir de vide, des éléments de soupape et un dispositif d'aspiration, pour générer le niveau de vide ou de dépression requis qui est nécessaire pour aider à la distribution et au développement de la mousse dans ladite cavité (4) dudit corps creux (2) dans la configuration fermée de manière étanche dudit moule de confinement (3).

**13.** Appareil selon l'une quelconque des revendications 10 à 12, dans lequel ledit dispositif de mélange à haute pression (10) inclut des buses d'alimentation (15A, 15B) pour les composants individuels de polyuréthane (A, B) et est configuré pour alimenter les composants de polyuréthane (A, B) dans une chambre de mélange d'une manière appropriée pour générer un mélange de turbulences, dans lequel lesdites buses (15A, 15B) sont reliées, au moyen de conduites d'alimentation respectives (16A, 16B), à des pompes de dosage respectives (12A, 12B) pour l'alimentation en composants de polyuréthane, lesquelles sont actionnées par des moyens moteurs respectifs (M1, M2) qui sont reliés de manière opérationnelle à ladite unité de commande électronique (CU).

**14.** Appareil selon l'une quelconque des revendications 10 à 13, incluant également des moyens de détection du débit massique ou volumique (17A, 17B) agencés pour détecter les débits ($Q_A$, $Q_B$) des composants individuels de polyuréthane (A, B) alimentant le dispositif de mélange à haute pression (10) sur les conduites d'alimentation respectives (16A, 16B), et pour fournir un signal du débit détecté à une entrée respective ($I_A$, $I_B$) de l'unité de commande électronique (CU).

**15.** Appareil selon l'une quelconque des revendications 10 à 14, incluant également des moyens transducteurs de pression (18A, 18B), agencés pour détecter, sur les lignes d'alimentation respectives (16A, 16B), les valeurs de pression ($P_A$, $P_B$) des composants individuels de polyuréthane (A, B) alimentant le dispositif de mélange à haute pression (10), et pour fournir un signal de la pression détectée à l'entrée respective ($I_A$, $I_B$) de l'unité de commande électronique (CU).

**16.** Appareil selon la revendication 13, ou selon la revendication 14 ou 15 telle qu'annexée à la revendication 13, dans lequel ladite unité de commande électronique (CU) inclut un dispositif de commande relié de manière opérationnelle auxdits moyens moteurs (M1, M2), ledit dispositif de commande incluant des moyens de mémoire (20A, 20B) aptes à générer au moins un signal ($Q_{RA}$, $Q_{RB}$) d'un débit de référence variable pour les composants de polyuréthane (A, B) devant alimenter les buses (15A, 15B) du dispositif de mélange à haute pression (10), ladite unité de commande électronique (CU) étant programmée par un logiciel apte à recevoir en entrée les données relatives à la quantité à distribuer pour chaque zone, et la variation de débit respective d'un mélange de polyuréthane à distribuer, pour calculer et stocker dans lesdits moyens de mémoire (20A, 20B) du dispositif de commande, des temps de distribution et des variations des débits des composants individuels de polyuréthane (A, B) à alimenter audit dispositif de mélange à haute pression (10), et par conséquent pour faire varier le débit, la vitesse et les temps du jet de mélange de polyuréthane injecté dans ladite cavité (4) du corps creux (2), en fonction des signaux ($Q_{RA}$, $Q_{RB}$) de débit de référence variable générés par le dispositif de commande et en fonction du signal de débit ($Q_A$ ; $Q_B$) détectés pour les composants individuels de polyuréthane (A, B).

**17.** Appareil selon la revendication 13, ou selon l'une quelconque des revendications 14 à 16 telle qu'annexée à la revendication 13, dans lequel lesdits moyens moteurs (M1, M2) desdites pompes doseuses (12A, 12B) sont du type à courant alternatif et sont reliés à un circuit électrique d'alimentation commandant la vitesse de rotation, et sont configurés pour fonctionner avec une vitesse variable en fonction des signaux de débit de référence variable ($Q_{RA}$, $Q_{RB}$) étant générés par le logiciel de ladite unité de commande (CU) en fonction des données de débit et de rapport programmées.

Fig. 1

Fig. 2

Fig. 3

Fig. 4

Fig. 5

Fig. 6

Fig. 7

**EP 3 278 949 B1**

**REFERENCES CITED IN THE DESCRIPTION**

**Patent documents cited in the description**

- EP 1778449 B1
- WO 2010094715 A
- US 8894402 B
- US 4332335 A
- EP 1781457 A
- DE 10243873 A
- EP 2366525 A
- US 8709313 B2